# EUROPEAN PATENT SPECIFICATION

(11) **EP 2 849 487 B1**
(45) Date of publication and mention of the grant of the patent: **17.08.2016**
(21) Application number: 13800124.3
(22) Date of filing: 05.06.2013
(51) Int. Cl.: H04W 48/06, H04W 28/14, H04L 29/08

(54) **CACHE SYSTEM, DEVICE AND METHOD APPLIED IN NETWORK**
CACHESYSTEM, VORRICHTUNG UND VERFAHREN IN EINEM NETZWERK
SYSTÈME, DISPOSITIF ET PROCÉDÉ DE CACHE APPLIQUÉS EN RÉSEAU

(30) Priority: 05.06.2012 CN 201210183025
(43) Date of publication of application: 18.03.2015
(73) Proprietor: Huawei Technologies Co., Ltd., Longgang District Shenzhen, Guangdong 518129 (CN)
(72) Inventor: XIONG, Chunshan, Shenzhen Guangdong 518129 (CN)
(74) Representative: Pfenning, Meinig & Partner mbB
(86) International application number: PCT/CN2013/076782
(87) International publication number: WO 2013/182052

(56) References cited:
- WO-A1-2011/032732
- CN-A- 101 567 875
- CN-A- 101 567 875
- CN-A- 102 377 662
- US-A1- 2006 179 228
- US-A1- 2011 320 592
- "3rd Generation Partnership Project; Technical Specification Group Services and System Aspects; General Packet Radio Service (GPRS) enhancements for Evolved Universal Terrestrial Radio Access Network (E-UTRAN) access (Release 11)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.1.0, 8 March 2012 (2012-03-08), pages 1-284, XP050555356, [retrieved on 2012-03-08]

## Description

### TECHNICAL FIELD

The present invention relates to the field of wireless communications, and in particular, to a caching system, apparatus, and method applied to a network.

### BACKGROUND

At an early stage of Internet (Internet) development, because a transmission bandwidth of a network was insufficient, a relatively long time was required in a web page downloading process. Therefore, a manner of deploying a device with a cache (Cache) or proxy cache (Proxy Cache) function on the Internet was put forward. When a user downloads a web page, such a cache function device backs up content of the web page to local storage space of the cache function device. When another user downloads the same web page, the cache function device directly provides the stored content of the web page for the user, and the content of the web page is no longer acquired from the source network server. With such a method for caching web page content, a speed of accessing the web page later can be greatly improved, and meanwhile, a transmission pressure on the source network server is alleviated because the amount of users' access to the source network server is reduced. In this way, a problem of network server congestion will not occur.

Later, a technology emerged for specially deploying cache function devices on a network, and connecting these cache function devices to form a dedicated network. This technology can implement dynamic scheduling, storage, and forwarding of service content on the dedicated network, thereby greatly improving a speed of accessing the service content by a user, reducing a delay for accessing the service content, reducing transmission resources that access a source service content site, and alleviating a transmission pressure on the source content site. Later, the dedicated network was called a content delivery network (Content Delivery Network, CDN).

Nowadays, because of extensive application of smartphones and tablet computers, a content service such as a video service has gained rapid development, and a large number of video downloads by using a wireless access technology occupy many network transmission resources, especially when a large amount of hot content is repetitively downloaded. In addition, because a large number of users simultaneously apply to a service source of same hot content for downloading the hot content, the service source is congested. As a result, many users cannot download the hot content, or it takes a longer time for downloading, or for some videos on the Internet in particular, picture stagnation occurs multiple times in a watching process.

Therefore, many operators consider applying the foregoing caching technology to a wireless communications system, so as to improve a speed of accessing content by a user equipment (User Equipment, UE), reduce a delay for accessing the content, and lower transmission costs of the source content site. However, because a wireless communications network is generally a specially defined network and it is different from the conventional Internet, features such as mobility of the UE and a specific structure of the wireless communications network need to be considered when the caching technology is applied to the wireless communications network.

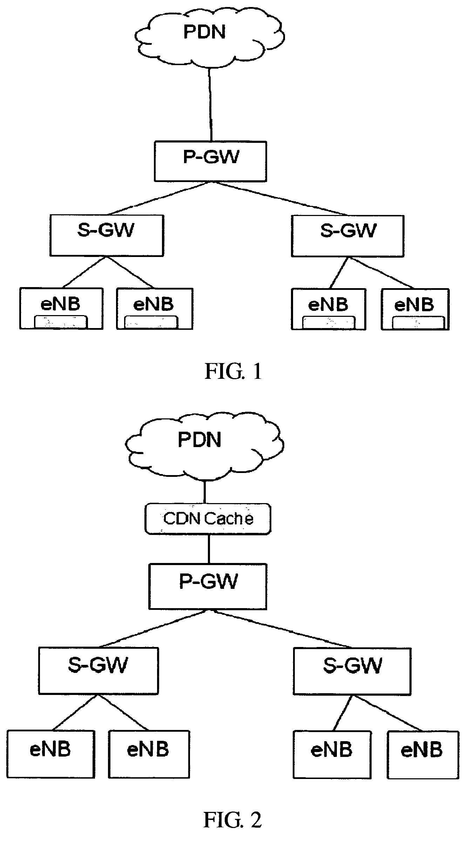

In the prior art, generally the cache function may be disposed at two positions, as shown in the following figures. In FIG. 1, the cache function is disposed on a wireless access network node, and generally on an evolved system base station (eNodeB, eNB), a radio network controller (Radio Network Controller, RNC), or a base station controller (Base Station Controller, BSC), where a blank square box in the eNB shown in FIG. 1 represents a cache function module. In FIG. 2, the cache function is disposed on an SGi or a Gi interface, where CDN Cache in FIG. 2 represents an disposed cache function module. Currently, the known Cache function is internally implemented by a packet data network gateway (Packet Data Network Gateway, PGW or P-GW) or a gateway GPRS support node (Gateway GPRS Support Node, GGSN), or implemented by a content delivery network (Content Delivery Network, CDN) Cache device except the P-GW and the GGSN, or internally implemented by an eNB, an RNC, or a BSC.

Currently, a major manner of content caching is passive caching. That is, a cache device stores content that is accessed by a UE, and directly provides the cached content for another UE when the UE accesses the same content. This is a passive caching manner, as for example discussed in published patent applications US 2011/0320592 A1, CN 101567875A and WO 2011/032732 A1. Although caching only content of a specified content provider (Content Provider, CP) or service provider (Service Provider, SP) can be implemented through configuration, such configuration does not bring excellent dynamics and expansion performance.

### SUMMARY

Embodiments of the present invention provide a caching system, apparatus, and method applied to a network to cache, according to a request of an external PDN, content to be cached.

To resolve the foregoing technical issue, an embodiment of the present invention provides a caching system applied to a network. The system includes a caching policy control device and at least one main cache device, where;
the caching policy control device is configured to receive a content caching request sent by an external packet data network (PDN), and control, according to the content caching request, the at least one main cache device to cache external content, where the external content is content sent by the external PDN; and
the at least one main cache device is connected to the caching policy control device, located on a data channel between an anchor gateway of the network and the external PDN, and configured to cache the external content according to the control of the caching policy control device;
wherein the caching policy control device comprises:
   a request acquiring module, configured to receive the content caching request sent by the external PDN;
   a permission determining module, configured to determine, according to the content caching request and a predetermined caching policy, whether to allow the at least one main cache device to cache the external content; and
   a caching control module, configured to, when a determination result of the permission determining module is that caching is allowed, send a main-cache command to the at least one main cache device, to control the at least one main cache device to cache the external content;
   wherein the at least one main cache device comprises:
      a main-cache starting module, configured to receive the main-cache command sent by the caching policy control device, and allocate local storage space according to the main-cache command;
      a main-cache notification sending module, configured to notify the caching policy control device after the local storage space is successfully allocated, so that the caching policy control device notifies the external PDN to send the external content to the main cache device; and
      an external-content receiving module, configured to receive the external content sent by the PDN.

Correspondingly, an embodiment of the present invention further provides a caching method applied to a network, where the network includes a caching policy control device and at least one main cache device, and the method includes:
receiving, by the caching policy control device, a content caching request sent by an external packet data network, PDN, and controlling, according to the content caching request, the at least one main cache device to cache external content, where the external content is content provided by the external PDN; and
caching, by the at least one main cache device, the external content according to the control of the caching policy control device, where the at least one main cache device is connected to the caching policy control device, and is located on a data channel between an anchor gateway of the network and the external PDN;
wherein the controlling, according to the content caching request, the at least one main cache device to cache external content comprises:
   determining, according to the content caching request and a predetermined caching policy, whether to allow the at least one main cache device to cache the external content; and
   when a determination result is that caching is allowed, sending a main-cache command to the at least one main cache device, to control the at least one main cache device to cache the external content;
   wherein the caching, by the at least one main cache device, the external content according to the control of the caching policy control device comprises:
      receiving the main-cache command sent by the caching policy control device, and allocating local storage space according to the main-cache command;
      notifying the caching policy control device after the local storage space is successfully allocated, so that the caching policy control device notifies the external PDN to send the external content to the main cache device; and
      receiving the external content sent by the PDN.

In another aspect, an embodiment of the present invention further provides a caching policy control device, where the caching policy control device is connected to at least one main cache device on a network and to an external packet data network, PDN; and
the caching policy control device is configured to receive a content caching request sent by an external PDN, and control, according to the content caching request, the at least one main cache device to cache external content, where the external content is content sent by the external PDN;
wherein the caching policy control device comprises:
a request acquiring module, configured to receive the content caching request sent by the external PDN;
a permission determining module, configured to determine, according to the content caching request and a predetermined caching policy, whether to allow the at least one main cache device to cache the external content; and
a caching control module, configured to, when a determination result of the permission determining module is that caching is allowed, send a main-cache command to the at least one main cache device, to control the at least one main cache device to cache the external content
wherein the caching policy control device is configured to, after receiving a notification from the at least one main cache device that local storage space at the at least one main cache device for storing the external content is successfully allocated, to notify the external PDN to send the external content to the main cache device.

The embodiments of the present invention have the following beneficial effect: In a caching system according to an embodiment of the present invention, a caching policy control device is disposed, and the caching policy control device controls, by receiving a request sent by an external PDN, a main cache device to cache external content; therefore, a caching process can be actively triggered, to implement active caching of the content sent by the external PDN.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.
FIG. 1 is a schematic diagram of composition of a network on which a cache function is disposed on an eNB in the prior art;
FIG. 2 is a schematic diagram of composition of a network on which a cache function is disposed on a CDN cache device between a P-GW and a PDN in the prior art;
FIG. 3 is a schematic diagram of specific composition of a caching system applied to a network according to an embodiment of the present invention;
FIG. 4 is a schematic diagram of specific composition of a caching policy control device according to an embodiment of the present invention;
FIG. 5 is a schematic diagram of specific composition of a main cache device according to an embodiment of the present invention;
FIG. 6 is another schematic diagram of specific composition of a main cache device according to an embodiment of the present invention;
FIG. 7 is another schematic diagram of specific composition of a caching system applied to a network according to an embodiment of the present invention;
FIG. 8 is a schematic diagram of devices and related interfaces on a 3GPP network according to an embodiment of the present invention;
FIG. 9 is a schematic diagram of composition of a network on which an interface between a CPCF and an RAN cache is added on a basis of FIG. 8;
FIG. 10 is a schematic diagram of composition of a network on which a PCRF implements a CPCF function, there is a C-D-C interface function between the PCRF and an RAN cache, and a main cache function entity is disposed in a P-GW or GGSN function entity;
FIG. 11 is a schematic diagram of composition of a network on which a PCRF implements a CPCF function, there is no interface between the PCRF and an RAN cache, and a main cache function entity is disposed in a P-GW or GGSN function entity;
FIG. 12 is a schematic diagram of composition of a network with single-layer caching according to an embodiment of the present invention;
FIG. 13 is another schematic diagram of composition of a network with single-layer caching according to an embodiment of the present invention;
FIG. 14 is a schematic diagram of composition of a network on which a main cache function and a CPCF function are implemented on a logical function entity according to an embodiment of the present invention;
FIG 15 is a specific schematic flowchart of a caching method applied to a network according to an embodiment of the present invention;
FIG. 16 is a specific schematic flowchart for implementing first-layer network caching in Pull mode according to an embodiment of the present invention;
FIG. 17 is a specific schematic flowchart for implementing first-layer network caching in Push mode according to an embodiment of the present invention;
FIG. 18 is a specific schematic flowchart for implementing second-layer network caching in Pull mode in a double-layer caching architecture according to an embodiment of the present invention;
FIG. 19 is a specific schematic flowchart for implementing second-layer network caching in Push mode in a double-layer caching architecture according to an embodiment of the present invention;
FIG. 20 is a specific schematic flowchart for implementing first-layer network caching when there are multiple main cache devices according to an embodiment of the present invention;
FIG. 21 is another specific schematic flowchart for implementing first-layer network caching when there are multiple main cache devices according to an embodiment of the present invention; and
FIG. 22 is a specific schematic flowchart of network caching in double-layer caching architecture when there is an interface between an RAN cache and a CPCF according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

In a network system shown in FIG. 2, its caching manner is passive caching. That is, content accessed by a UE is stored, and the cached content is directly provided for another UE when the UE accesses the same content. This is a passive caching manner. Although caching only content provided by a specified external PDN (such as a CP or an SP) can be performed through configuration, such configuration work does not bring excellent dynamics and expansion performance. That is, content cannot be sent in advance to a cache device for caching. Further, if an operator wants to provide a capability of caching specified content of only a specified CP or SP, the prior art cannot implement quick and exact configuration.

An embodiment of the present invention provides a solution to actively triggering a caching process in a wireless network system, so as to resolve a problem in the prior art that actively caching stored content in a cache device cannot be implemented in the wireless network system. In this embodiment of the present invention, a caching policy control device can control, according to a request sent by an external PDN, content to be cached and a caching manner, so that the external PDN can actively trigger a process of caching in a main cache device.

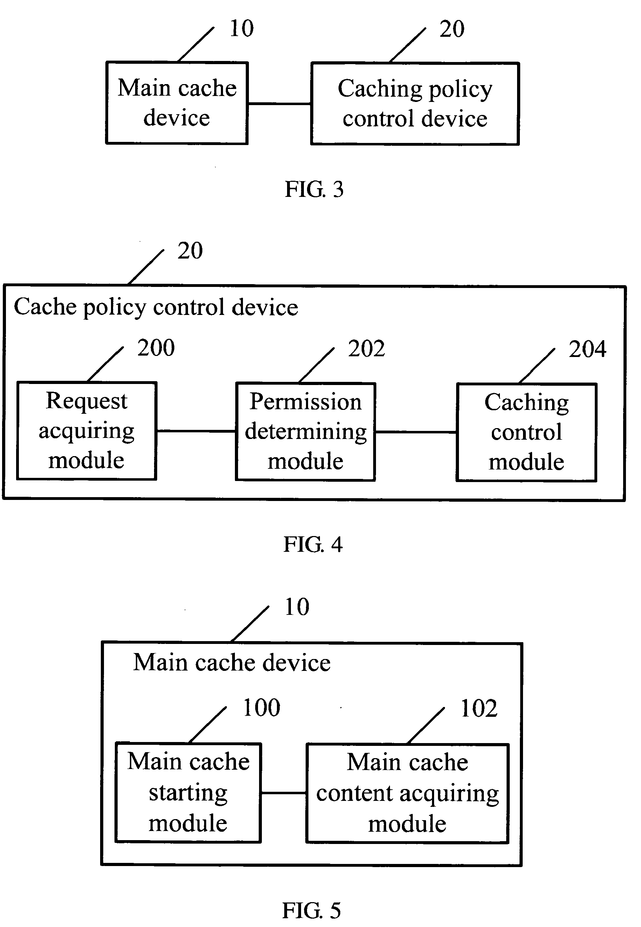

FIG. 3 shows a caching system applied to a network according to an embodiment of the present invention. It should be understood that the technical solutions of the present invention may be applied to various communications systems, such as a global system for mobile communications (GSM, Global System for Mobile communications) system, a code division multiple access (CDMA, Code Division Multiple Access) system, a wideband code division multiple access (WCDMA, Wideband Code Division Multiple Access) system, a general packet radio service (GPRS, General Packet Radio Service) system, a long term evolution (LTE, Long Term Evolution) system, a long term evolution advanced (LTE-A, Long Term Evolution Advanced) system, and a universal mobile telecommunications system (UMTS, Universal Mobile Telecommunications System), which are not limited in the embodiment of the present invention. However, for ease of description, an LTE network is used as an example for description in the embodiment of the present invention.

The embodiment of the present invention may be applied to wireless networks of different standards. In different systems, a radio access network may include different network elements. For example, in LTE (Long Term Evolution, long term evolution) and LTE-A (Long Term Evolution Advanced, long term evolution advanced), network elements of a radio access network include an eNB (eNodeB, evolved base station); in WCDMA (Wideband Code Division Multiple Access, wideband code division multiple access), network elements of a radio access network include an RNC (Radio Network Controller, radio network controller) and a NodeB; and similarly, a solution similar to the solutions in the embodiment of the present invention may also be applied to another wireless network such as WiMAX (Worldwide Interoperability for Microwave Access, worldwide interoperability for microwave access), except that related modules in a base station system may be different. The related modules are not limited in the embodiment of the present invention, but for ease of description, the following embodiments use an eNodeB as an example for description.

It should be further understood that in the embodiment of the present invention, a terminal may also be called a user equipment (UE, User Equipment), a mobile station (MS, Mobile Station), a mobile terminal (Mobile Terminal), or the like. The terminal may communicate with one or more core networks through a radio access network (RAN, Radio Access Network). For example, the terminal may be a mobile phone (or called a "cellular" phone), or a computer that has a communications function. For example, the terminal may also be a portable, pocket, handheld, computer-embedded, or vehicle-mounted mobile apparatus.

The system may include: a caching policy control device 20, configured to receive a content caching request sent by an external packet data network (Packet Data Network, PDN), and control, according to the content caching request, at least one main cache device 10 to cache external content, where the external content is content provided by the external PDN; and the at least one main cache device 10, located on a data channel between an anchor gateway of the network and the external PDN, connected to the caching policy control device 20, and configured to cache the external content according to the control of the caching policy control device. FIG 3 shows a case in which there is only one main cache device 10. The external PDN may be a network provided by a CP, an SP, or the like; or may be the Internet. Interactions among the main cache device, the caching policy control device, and the external PDN are implemented through interfaces.

An embodiment of the present invention further provides a caching policy control device 20, where the caching policy control device 20 is connected to at least one main cache device on a network, and is configured to receive a content caching request sent by an external PDN, and control, according to the content caching request, the at least one main cache device to cache external content, where the external content is content sent by the external PDN. When the network further includes at least one border cache device, the caching policy control device 20 is further configured to control the at least one border cache device to cache the external content sent by the at least one main cache device.

As shown in FIG. 4, the caching policy control device 20 includes:
a request acquiring module 200, configured to receive the content caching request sent by the external PDN, where the content caching request may include a network address of content cached by the main cache device of the external PDN, such as a uniform resource locator (Uniform Resource Locator, URL) or a uniform resource name (Uniform Resource Name, URN), and may further include metadata of the external content, where the metadata is data that describes the external content, for example, a type of the external content, such as Video, hypertext markup language (Hypertext Markup Language, HTML), text, portable document format (Portable Document Format, PDF), or word (Word, which refers to a word processing application program Microsoft Word of Microsoft), a size (size) of the content, a language (Language) of the external content, where the language may be Chinese, English, or French, and a character set (Charset), such as whether Unicode or ASCII codes are used;
a permission determining module 202, configured to determine, according to the content caching request and a predetermined caching policy, whether to allow the at least one main cache device to cache the external content, where the predetermined caching policy may be configured in advance, for example, the policy is determined by a service level agreement (Service Level Agreement, SLA), that is, it may be determined, according to the SLA, whether the content that corresponds to the URN/URL meets the SLA, so as to determine whether to perform accelerated transmission of the external content and actively cache the content; and
a caching control module 204, configured to, when a determination result of the permission determining module is that caching is allowed, send a main-cache command to the at least one main cache device, to control the main cache device to cache the external content. The main-cache command may be the URN/URL and metadata that corresponds to the URN/URL. The caching policy control device may obtain an Internet Protocol (Internet Protocol, IP) address of a main cache function entity through a domain name system (Domain Name System, DNS) or in a manner of static configuration, so as to send a command to the main cache function entity.

As can be seen from the foregoing description, when controlling a caching process of the main cache device, the caching policy control device may further perform control according to the predetermined caching policy. The predetermined caching policy may be set by an operator, so that the caching process can be more precisely and flexibly controlled. For example, specific caching control may be performed for different content provided by the external PDN.

Further, when controlling the main cache device to cache the external content, the caching control module 204 may use two modes, that is, pull (Pull) and push (Push), to enable the main cache device to cache the corresponding content.

When the pull mode is used, the main cache device actively acquires the content from the external PDN. In this case, as shown in FIG. 5, the main cache device 10 includes: a main-cache starting module 100, configured to receive the main-cache command sent by the caching policy control device, and allocate local storage space according to the main-cache command; and a main-cache content acquiring module 102, configured to, after the local storage space is successfully allocated, acquire, according to address information of the external content provided in the main-cache command, the external content sent by the external PDN, for example, through a GET command of the Hypertext Transfer Protocol (Hypertext Transfer Protocol, HTTP) or through the File Transfer Protocol (File Transfer Protocol, FTP).

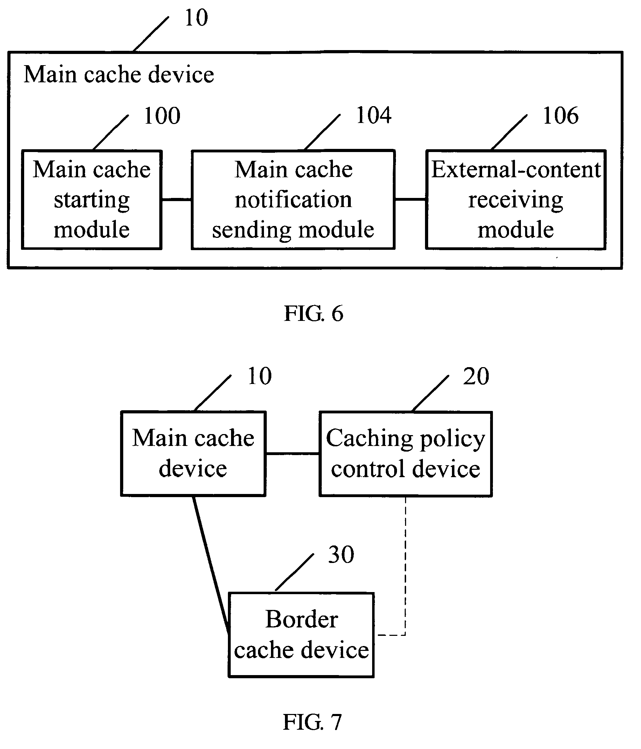

When the push mode is used, the external PDN actively sends the content to the main cache device. In this case, as shown in FIG. 6, the main cache device 10 includes: a main-cache starting module 100, configured to receive the main-cache command sent by the caching policy control device, and allocate local storage space according to the main-cache command; a main-cache notification sending module 104, configured to notify the caching policy control device after the local storage space is successfully allocated, so that the caching policy control device notifies the external PDN to send the external content to the main cache device; and an external-content receiving module 106, configured to receive the external content sent by the PDN.

After the external content is successfully acquired, no matter in what mode the external content is acquired, the main cache device may further generate a network address. That is, the main cache device may further include: a main address generating unit (not indicated in the figure), configured to, after the external content is acquired, generate a network acquisition address for acquiring the external content from the main cache device. In addition, the network acquisition address of the external content may be sent to the caching policy control device 20. Certainly, in this address, a host portion (Host) of a URL that points to the main cache device is an IP address of the main cache device or a domain name of the main cache device.

In the following embodiments, a specific implementation solution is further described in detail in terms of a cached-content acquiring process. Further, the caching policy control device controls, in a serial manner, a parallel manner, or a serial and parallel manner, multiple main cache devices to cache the external content, which is also described in detail.

In an embodiment of the present invention, as shown in FIG. 7, the network caching system may further include: at least one border cache device 30, located on a user-plane data channel of the network, and configured to cache, according to control of the caching policy control device 20 or the main cache device 10, the content sent by the main cache device.

Certainly, in this embodiment of the present invention, the border cache device may also acquire external content in two modes, that is, pull (Pull) and push (Push).

When the pull mode is used, the border cache device 30 actively acquires the content from the main cache device 10. In this case, the border cache device 30 includes: a border-cache starting module, configured to receive a border-cache command sent by the caching policy control device 20 or the main cache device 10, and allocate local storage space according to the border-cache command; and a border-cache content acquiring module, configured to, after the local storage space is successfully allocated, acquire, according to the border-cache command, the external content sent by the main cache device.

When the push mode is used, the main cache device 10 actively sends the content to the border cache device 30. In this case, the border cache device 30 includes: a border-cache starting module, configured to receive a border-cache command sent by the caching policy control device 20 or the main cache device 10, and allocate local storage space according to the border-cache command; a border-cache notification sending module, configured to notify the caching policy control device 20 or the main cache device 10 after the local storage space is successfully allocated, so that the caching policy control device 20 notifies the main cache device 10 to send the external content to the border cache device 20, or the main cache device 10 sends the external content to the border cache device 20 according to the notification; and an external-content receiving module, configured to receive the external content sent by the main cache device 10.

After the external content is successfully acquired, the border cache device 30 may further generate a network address. That is, the border cache device further includes: a user address generating unit, configured to, after the external content is acquired, generate a network acquisition address for acquiring the external content from the border cache device.

Likewise, when the system includes multiple border cache devices 30, the caching policy control device 20 or the main cache device 10 controls, in a serial manner, a parallel manner, or a serial and parallel manner, the multiple border cache devices to cache the external content.

In a specific embodiment, the main cache device and the caching policy control device may be disposed in a same device in a form of a function entity; and certainly, may also be disposed in different devices in a form of function entities; or, one may be disposed in a certain device in a form of a function entity, and the other may be an independently disposed network device.

For example, when a network system is a 2G, 3G, or 4G network, the main cache device may be disposed in a P-GW or a GGSN, or disposed on an SGi or Gi interface between a P-GW or a GGSN and the PDN. The caching policy control device may be an independently disposed network device, or the caching policy control device may be disposed as a function module of a policy and charging rules function (Policy and Charging Rules Function, PCRF). The border cache device is generally disposed on a user-plane data channel of the network relatively close to a UE, or disposed in an eNB, an RNC, or a BSC in a form of a function entity. On a WiFi network, the border cache device may be disposed in a WiFi access point (Access Point, AP).

Certainly, in the foregoing solution, interfaces between various devices or function modules and interfaces with other devices or function modules on the network are not yet described. Considering that these interfaces are specifically related to an actual type of the network, these interfaces cannot be exemplarily described one by one in this embodiment of the present invention, and only one network type is used in the following descriptions. For a person of ordinary skill in the present invention, the interfaces and interface relationships are merely defined for clear description. In practice, any names or defined interfaces that implement functions of these interfaces are within the protection scope of the present invention, and are not described one by one below.

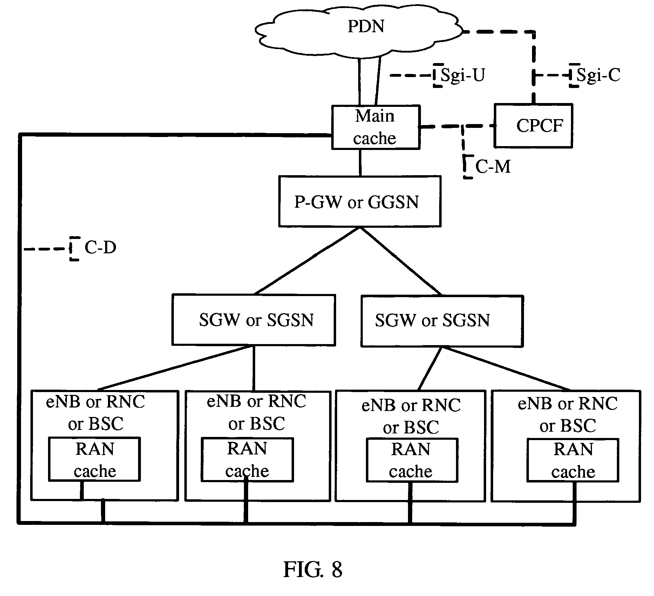

FIG. 8 is a schematic diagram of devices and related interfaces on a 3GPP network according to an embodiment of the present invention, where a dashed line between various devices represents an interface that does not transmit content but transmits only content-related control information and content metadata, and a solid line represents an interface that transmits content (the same below). In this example, the following function entities (called devices in the foregoing embodiments) are disposed:
a main cache function entity (Main Cache, main cache for short) on an SGi-U interface, configured to directly cache content of an external PDN, where, in this embodiment, the main cache is located on a data channel between the PDN and a P-GW (or a GGSN);
a cache function entity (RAN Cache, RAN cache for short) built in an RAN node, connected to the main cache through a C-D interface and configured to directly cache the content which is of the external PDN and is provided by the main cache, where multiple RAN caches may be disposed; and
a caching policy control entity (CPCF, Cache Policy Control Function), connected to the main cache through a C-M interface, connected to the external PDN through an SGi-C interface, and configured to receive a content caching request of the external PDN and control the main cache and the RAN cache to cache related content.

The related interfaces include:
an interface between the main cache and the external PDN, which is represented by SGi-U, where the SGi-U interface is a logical interface, and the interface may be a part of functions of an SGi/Gi interface, or may be a newly defined interface which implements a connection interface for caching content between the main cache and the external PDN, where the functions of the SGi/Gi interface may be extended on a basis of the prior art so that the SGi/Gi interface has functions of the SGi-U interface;
an interface between the CPCF and the external PDN, which is represented by SGi-C, where the SGi-C interface is a logical interface, and the interface may be a part of functions of the SGi/Gi interface, or may be a newly defined interface which implements a connection interface for controlling content caching between the CPCF and the external PDN, where the functions of the SGi/Gi interface may be extended on a basis of the prior art so that the SGi/Gi interface has functions of the SGi-C interface;
an interface between the main cache and the CPCF, which is represented by C-M, where the CPCF controls, through the C-M interface, the main cache to acquire the content of the external PDN, and stores the content locally in the main cache; and
an interface between the main cache and the RAN cache, which is represented by C-D, where the RAN cache acquires, through the C-D interface, the content acquired by the main cache from the external PDN, and locally stores the content.

It should be noted that FIG. 8 merely describes a cache-related structure of the network but does not describe a complete structure of the network. It should be understood that any other structure is consistent with that in the prior art, and no further details are provided herein.

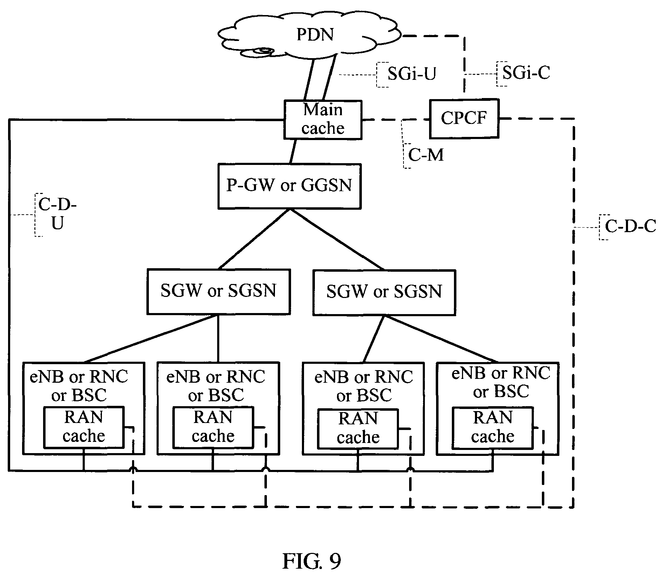

FIG. 9 is another schematic structural diagram of devices and related interfaces on a 3GPP network according to an embodiment of the present invention. A difference from FIG. 8 is that an interface between the CPCF and the RAN cache is added on a basis of FIG. 8. The interface between the main cache and the RAN cache is represented by C-D-U, whereas the interface between the CPCF and the RAN cache is represented by C-D-C. In this interface manner, the CPCF can directly control a caching process of the RAN cache.

Further, in the examples shown in FIG. 8 and FIG. 9, the main cache and the CPCF are independent function entities, but may be embedded in another device in the following embodiments.

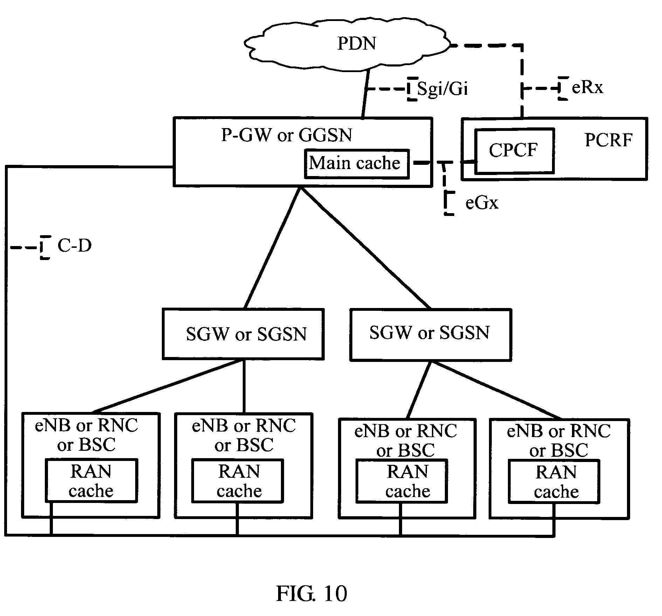

FIG. 10 is a schematic structural diagram when the main cache and the CPCF shown in FIG. 8 are embedded in another device. A difference from FIG. 8 is that the main cache is disposed in an anchor gateway, that is, inside a P-GW or a gateway GPRS support node (Gateway GPRS Support Node, GGSN) function entity, which means the P-GW or the GGSN implements functions of the main cache. Likewise, the CPCF is disposed in a policy and charging rules function (Policy and Charging Rules Function, PCRF), which means the PCRF implements functions of the CPCF. An interface between the external PDN and the P-GW or the GGSN is the SGi/Gi interface; an interface between the PDN and the PCRF is an eRx interface, where the eRx interface is an enhanced Rx interface of the SGi-C interface; and an interface between the P-GW/GGSN and the PCRF is an eGx interface.

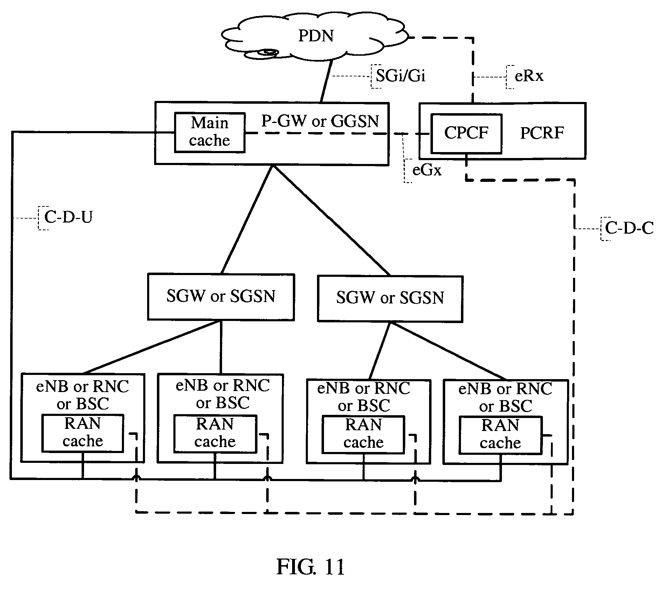

FIG 11 is a schematic structural diagram when the main cache and the CPCF shown in FIG. 9 are embedded in another device. A difference from FIG. 9 is that the main cache is disposed in a P-GW or a gateway GPRS support node (Gateway GPRS Support Node, GGSN) function entity, which means the P-GW or the GGSN implements functions of the main cache. Likewise, the CPCF is disposed in a policy and charging rules function (Policy and Charging Rules Function, PCRF), which means the PCRF implements functions of the CPCF. An interface between the external PDN and the P-GW or the GGSN is the SGi/Gi interface; an interface between the PDN and the PCRF is an eRx interface, where the eRx interface is an enhanced Rx interface of the SGi-C interface; and an interface between the P-GW/GGSN and the PCRF is an eGx interface, and an interface between the PCRF and the RAN cache is the C-D-C interface.

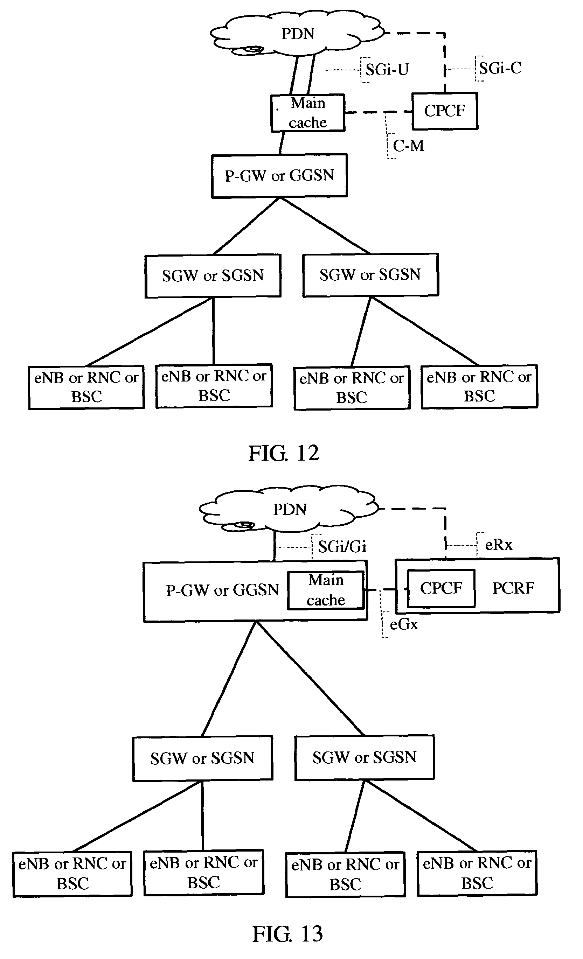

FIG 12 and FIG 13 are schematic diagrams of a network with single-layer caching (that is, there is only one layer of cache, which is a main cache, in a caching structure). A difference from FIG. 8 and FIG. 11 is that no RAN cache is disposed on the network with the single-layer caching, and other interfaces and network devices are the same and not repeated one by one again. A caching system architecture with the single-layer caching is easy to deploy and involves a low cost. In addition, in an architecture with embedded single-layer caching, only a new function is added on an existing network node, and the caching architecture in this embodiment of the present invention can be implemented simply by upgrading software and hardware, which is of relatively high cost performance. In addition, because no RAN cache exists, when a UE is moving, interruption of a content transmission process caused by a change to an RAN cache does not occur.

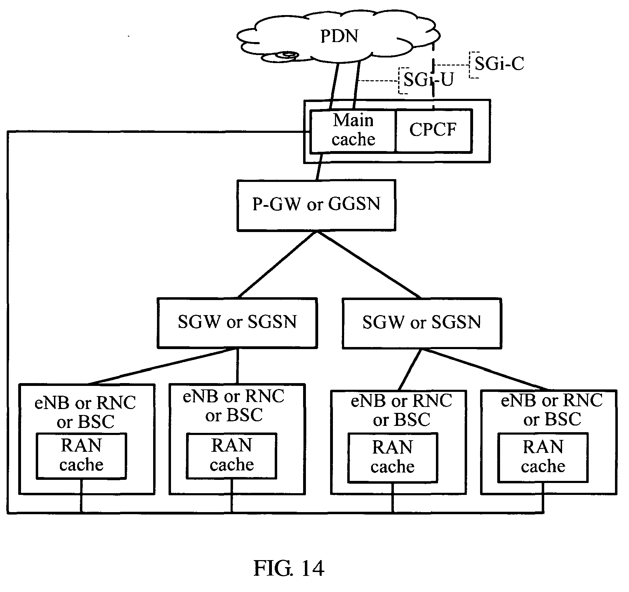

An example shown in FIG. 14 is a double-layer caching architecture (that is, two layers of cache, a main cache and a border cache, simultaneously exist in a caching structure). The main cache and a CPCF are integrated and independently disposed, and functions of the main cache and functions of the CPCF are implemented on one logical function entity. Because the main cache and the CPCF are integrated, there is no message exchange between the main cache and the CPCF. In addition, message exchange between the main cache and an RAN cache node and message exchange between the CPCF and the RAN cache node are integrated.

In the caching system according to the embodiments shown in FIG. 8 to FIG 11, a caching policy control device is disposed, and it can control a caching process of a main cache device according to a request of an external PDN, so that the external PDN actively triggers the caching process, thereby improving flexibility and controllability of caching.

The following further describes a specific embodiment of the present invention from an angle of the foregoing corresponding caching methods.

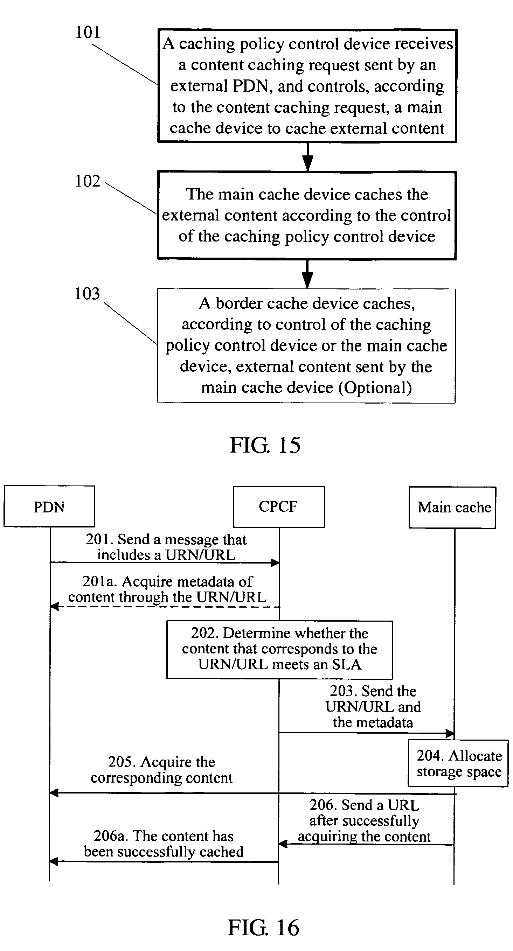

An embodiment of the present invention provides a caching method applied to a network, where the network includes a caching policy control device and at least one main cache device. As shown in FIG. 15, the method includes:

101. The caching policy control device receives a content caching request sent by an external PDN, and controls, according to the content caching request, the at least one main cache device to cache external content.

For example, the caching policy control device determines, according to the content caching request and a predetermined caching policy, whether to allow the main cache device to cache the external content; and if a determination result is that caching is allowed, sends a main-cache command to the main cache device to control the main cache device to cache the external content.

102. The at least one main cache device directly caches the external content according to the control of the caching policy control device, where the at least one main cache device is connected to the caching policy control device, and is located on a data channel between an anchor gateway of the network and the external PDN, and the external content is content provided by the external PDN.

For example, the at least one main cache device receives a main-cache command sent by the caching policy control device, and allocates local storage space according to the main-cache command; and after the local storage space is successfully allocated, receives, according to the main-cache command, the external content sent by the external PDN; or
the at least one main cache device receives a main-cache command sent by the caching policy control device, and allocates local storage space according to the main-cache command; after the local storage space is successfully allocated, notifies the caching policy control device, so that the caching policy control device notifies the external PDN to send the external content to the main cache device; and receives the external content sent by the PDN.

Certainly, in step 102, after the external content is directly cached according to the control of the caching policy control device, the method may further include: after the external content is acquired, generating a network acquisition address for acquiring the external content from the main cache device.

103. At least one border cache device caches, according to control of the caching policy control device or the main cache device, content sent by the main cache device, where the at least one border cache device is located on a user-plane data channel of the network. This step is optional, that is, this step needs to be executed only when cache devices of the network include a border cache device.

The caching may be specifically: receiving a border-cache command sent by the caching policy control device or the main cache device, and allocating local storage space according to the border-cache command; and after the local storage space is successfully allocated, acquiring the external content from the main cache device according to the border-cache command; or
receiving a border-cache command sent by the caching policy control device or the main cache device, and allocating local storage space according to the border-cache command; notifying the caching policy control device or the main cache device after the local storage space is successfully allocated, so that the caching policy control device notifies the main cache device to send the external content to the border cache device, or the main cache device sends the external content to the border cache device according to the notification; and receiving the external content sent by the main cache device.

In addition, after the content sent by the main cache device is cached according to the control of the caching policy control device or the main cache device, the method may further include: after the external content is acquired, generating a network acquisition address for acquiring the external content from the border cache device.

Certainly, an embodiment of the present invention further discloses a caching control method, where the method is applied to a network that includes a caching policy control device, and the method includes:
A. Receive a content caching request sent by an external PDN.
B. Control, according to the content caching request, at least one main cache device on the network to cache external content, where the external content is content sent by the external PDN. This step may further specifically include: determining, according to the content caching request and a predetermined caching policy, whether to allow the at least one main cache device to cache the external content; and when a determination result of the permission determining module is that caching is allowed, sending a main-cache command to the at least one main cache device, to control the at least one main cache device to cache the external content.

Certainly, if the network further includes a border cache device, the method may further include: controlling the at least one border cache device on the network to cache the external content sent by the main cache device.

In the foregoing two embodiments, a general description of implementation flows of the caching process and caching control in various cases is given. Certainly, because specific composition of a caching system is different, interfaces of the caching system are different and the description in the foregoing embodiments is not enough to disclose other details. The following describes various specific cases. For purposes of highlighting the focus of the description and reducing a length of the description, in the following embodiments, entire flows are not necessarily described but merely a part is described.

Certainly, for system architectures to which the flows described in the following embodiments are applied, reference may be made to examples shown in FIG. 8 to FIG. 14, and the system architectures are not repeated one by one in the description of the following embodiments. Certainly, the flows may also be applied to other network architectures, and the other architectures are not described one by one due to a limited length of the description. A person of ordinary skill in the art may implement other network applications and extensions without creative efforts.

As shown in FIG. 16, this example is a process of implementing content caching on a main cache device. The caching process in the example shown in FIG 16 is applicable to a single-layer or double-layer caching architecture. Because caching is completed layer by layer, FIG. 16 may be a process of completing first-layer caching; and if a double-layer caching architecture exists, a second-layer caching operation is performed after the first-layer caching is completed.

Specifically, the following steps are included:
201. When a PDN (such as an SP or a CP) needs to transmit content through a network caching system to a user in an accelerated way, the PDN adds URN/URL information of a location of the content into a corresponding message, and sends the message to a CPCF of a mobile operator through an SGi-C interface that is open in advance with the mobile operator. The message may further optionally include metadata of content that corresponds to the URN/URL. The metadata is data that describes the content, for example, a type of the content (such as Video, HTML, text, PDF, or Word), a size (size) of the content, a language (Language) of the content, such as Chinese, English, or French, or a Charset (such as whether Unicode or ASCII codes are used).
   The SGi-C interface is defined in advance in an SLA between the mobile operator and a PDN of a third party. This interface is not open to other people, but is open to the specified PDN of the third party through the definition in the SLA. Before the SGi-C interface is established between the PDN of the third party and the mobile operator, access of the PDN of the third party is allowed only after security authentication (such as authentication based on a PKI (X.509) certificate) is passed, and additionally, the SGi-C interface further requires security protection, such as encapsulating security payload (Encapsulating Security Payload, ESP) protection of IPSec.
202. The CPCF determines, according to the acquired metadata and the SLA defined in advance, whether the content that corresponds to the URN/URL meets the SLA, so as to decide whether to perform accelerated transmission of the content and cache the content. If the PDN of the third party in step 201 does not provide the metadata of the content that corresponds to the URN/URL, a step 201a is further included before this step: the CPCF acquires the metadata of the content through the URN/URL.
   If the SLA specifies that the mobile operator should provide an accelerated video transmission capability for only the PDN of the third party, and if the URN/URL corresponds to a text data file or a PDF file, the CPCF does not perform the accelerated transmission of the content and thereby does not cache the content. In addition, generally the SLA will specify that the mobile operator should provide acceleration of content of a certain size, such as a size smaller than 100 MB, for the PDN of the third party. In this case, if the size of the content that corresponds to the URN/URL is greater than 100 MB, the CPCF does not perform the accelerated transmission of the content and thereby does not cache the content.
203. When the content that corresponds to the URN/URL meets regulations in the SLA, the CPCF sends the URN/URL and the metadata that corresponds to the URN/URL to a main cache function entity (Main Cache), where the URN/URL and the metadata that corresponds to the URN/URL are obtained in the steps 201 and 201a. The CPCF may obtain an IP address of the main cache function entity through a DNS or in a manner of static configuration.
204. The main cache function entity obtains the size of the content according to the metadata, and allocates corresponding storage space. In the actual allocation, because the main cache function entity further needs to store the URN/URL that corresponds to the content, the metadata, and other possible control information, a size of allocated cache is greater than the actual size of the content.
   If the main cache function entity has successfully allocated the corresponding storage space, a subsequent step 205 is executed; otherwise, if the main cache function entity fails to allocate the corresponding storage space (that is, idle storage space is too small), the main cache function entity sends a failure message to the CPCF, and the CPCF sends the failure message to the PDN of the third party and may provide information for the PDN of the third party to subsequently perform the accelerated transmission of the content again.
205. After successfully allocating the storage space, the main cache function entity acquires corresponding content data from the PDN of the third party through the URN/URL, for example, through an HTTP GET command or in FTP mode.
206. After successfully acquiring the data of the content that corresponds to the URN/URL (for example, whether all data content has been successfully obtained may be determined by comparing an actual size of a downloaded file with a size indicated by the metadata), the main cache function entity generates a URL that stores a location of the content and points to the main cache function entity, and sends a message to the CPCF, where the message indicates that the content has been successfully cached, and includes the URL that points to the main cache function entity.
   Obviously, in the URL that points to the main cache function entity, a host portion (Host) is the IP address of the main cache function entity or a domain name of the main cache function entity.
206a. The CPCF sends a message to the PDN of the third party, where the message indicates that the content that corresponds to the URN/URL has been successfully cached.

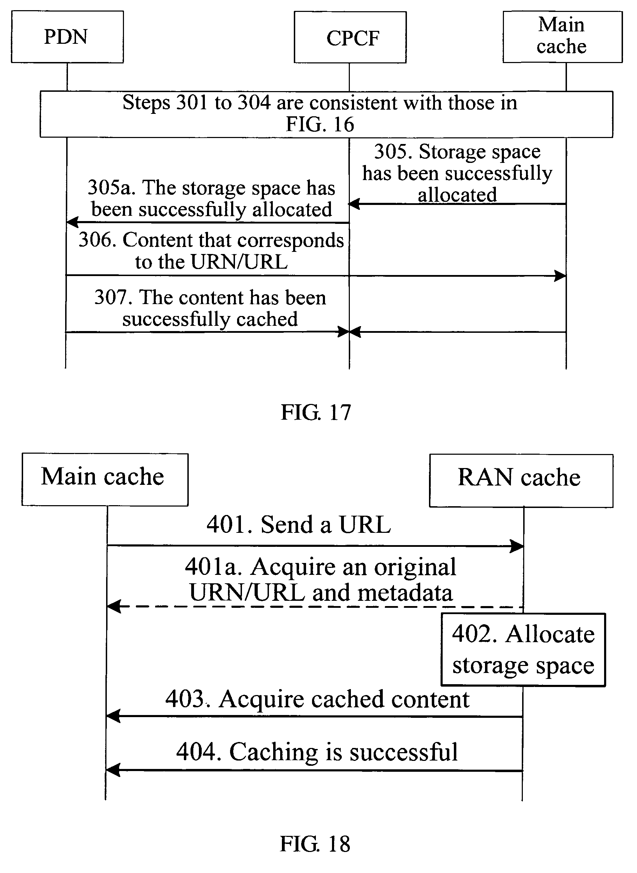

As shown in FIG. 17, steps 301 to 304 are consistent with the steps 201 to 204 in FIG. 16, and a difference lies in that the main cache function entity obtains cached content in Push mode. Similarly, a caching process depicted in FIG. 17 may also be applied to a single-layer or double-layer caching architecture.
305. After successfully allocating the storage space, the main cache function entity generates a URL that points to the main cache function entity to express a location storing the content, sends a message about successful storage space allocation to the CPCF, and includes the URL that points to the main cache function entity into the message.
   In the URL that points to the main cache function entity, a host portion (Host) is the IP address of the main cache function entity or a domain name of the main cache function entity.
   305a. The CPCF sends the message about the successful storage space allocation to the PDN of the third party, and includes the URL that points to the main cache function entity as described in step 305 into the message.
306. The PDN of the third party sends (that is, pushes), according to the URL that points to the main cache function entity, the content that corresponds to the URN/URL to the main cache function entity.
   The PDN of the third party may send (that is, push), through an HTTP POST command or an FTP command, the content that corresponds to the URN/URL to the main cache function entity.
307. After successfully receiving data of the content that corresponds to the URN/URL, the main cache function entity sends a message to the CPCF, where the message indicates that the content that corresponds to the URN/URL has been successfully stored. Likewise, after successfully sending the data of the content that corresponds to the URN/URL to the main cache function entity, the PDN of the third party sends a message to the CPCF, where the message indicates that the content that corresponds to the URN/URL has been successfully stored in the main cache function entity.

Obviously, both the flows defined in FIG. 16 and FIG. 17 are relatively simple, and the flow of the Pull method defined in FIG. 16 is a little simpler than the flow of the Push method defined in FIG. 17.

By using the two methods defined in FIG. 16 and FIG. 17, the PDN of the third party is capable of actively pushing content that corresponds to a URN/URL to a main cache device on a mobile network. Later, when accessing the URN/URL, a user of an operator of the mobile network does not need to access the URN/URL of the PDN of the third party any longer. In this way, transmission resources between the mobile network and the PDN of the third party can be saved.

Likewise, the PDN of the third party does not need to have a large server for a large number of UEs to simultaneously access the URN/URL. Therefore, when a large number of UEs access the URN/URL later, only content stored in the main cache or in an RAN cache is used. In this way, by using an open Mobile CDN capability that is provided by the mobile operator, the PDN of the third party can reduce IT investments and maintenance costs of server hardware and software, and can focus on content innovation, thereby facilitating development of the entire network industry.

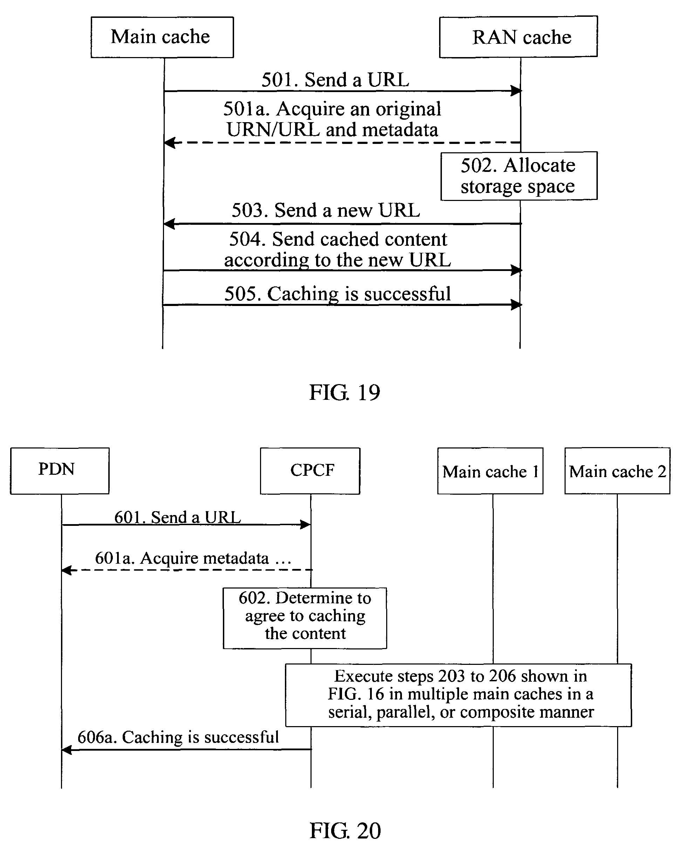

For a system in which a border cache device (such as an RAN cache) exists, after the main cache function entity successfully stores the content that corresponds to the URN/URL and is pushed by the PDN of the third party, the main cache function entity further needs to push the content to a cache function entity at a lower layer, that is, an RAN cache function entity on an RAN node (certainly, the content may be pushed to border cache devices located on different network nodes in different network systems). A method for pushing the content by the main cache function entity is quite similar to a method for pushing the content to the main cache function entity by the PDN of the third party. That is, there are also two methods for a content caching process of the RAN cache: one is a Pull method, which corresponds to the flow defined in FIG 18; and the other is a Push method, which corresponds to the flow defined in FIG. 19.

In the flows shown in FIG. 18 and FIG. 19, descriptions of a process in which a PDN of a third party pushes content to a main cache function entity are omitted (reference may be made to FIG. 16 and FIG. 17), but only a process in which a main cache function entity pushes the content to an RAN cache function entity is described.

As shown in FIG. 18, the Pull method includes the following steps:
401. After successfully acquiring data of content that corresponds to a URN/URL, the main cache function entity generates a URL that points to the main cache function entity, where the URL stores a location of the content that corresponds to the URN/URL and is pushed by a PDN of a third party. The main cache function entity sends the following to the RAN cache function entity: the URL that points to the main cache function entity, and the original URN/URL and metadata of the content that corresponds to the URL of the main cache function entity. In the URL that points to the main cache function entity, a host portion (Host) is an IP address of the main cache function entity or a domain name of the main cache function entity.
401a. If the main cache function entity does not provide the original URN/URL and metadata of the content that corresponds to the URL of the main cache function entity in step 401, the RAN cache function entity acquires the original URN/URL and metadata of the content through the URL that points to the main cache function entity.
402. The RAN cache function entity obtains a size of the content according to the metadata, and allocates corresponding storage space. Likewise, because the RAN cache function entity further needs to store the original URN/URL that corresponds to the content, the metadata, and other control information, a size of allocated cache is greater than the actual size of the content.
   If the RAN cache function entity has successfully allocated the corresponding storage space, a subsequent step 403 is executed; otherwise, if the RAN cache function entity fails to allocate the corresponding storage space (that is, idle storage space is too small), the RAN cache function entity sends a failure message to the main cache function entity.
403. After successfully allocating the storage space, the RAN cache function entity acquires corresponding data of the content from the main cache function entity through the URL that points to the main cache function entity, for example, through an HTTP GET command or in FTP mode.
404. After successfully acquiring the data of the content that corresponds to the URL of the main cache function entity, the RAN cache function entity sends a message to the main cache function entity, where the message indicates that the content indicated by the URL has been successfully cached.

Steps 501 and 502 in FIG. 19 are the same as the steps 401 and 402 in FIG. 18, except that the subsequent steps change to the following ones:
503. After successfully allocating the storage space, the RAN cache function entity generates a URL that points to the RAN cache function entity to express a location for storing the content, sends a message about successful storage space allocation to the main cache function entity, and includes the URL that points to the RAN cache function entity into the message.
   In the URL that points to the RAN cache function entity, a host portion (Host) is an IP address of the RAN cache function entity or a domain name of the RAN cache function entity.
504. The main function entity sends (that is, pushes), according to the URL that points to the RAN cache function entity, the content corresponding to the URL that points to the main cache function entity as described in step 501 to the RAN cache function entity.
   The main cache function entity may send (that is, push), through an HTTP POST command or an FTP command, the content corresponding to the URL that points to the main cache function entity as described in step 501 to the RAN cache function entity.
505. After successfully receiving the data of the content that corresponds to the URL as described in step 501, the RAN cache function entity sends a message to the main cache function entity, where the message indicates that the content that corresponds to the URL in step 501 has been successfully stored.

Obviously, both the flows defined in FIG. 18 and FIG. 19 are relatively simple, and the flow of the Pull method defined in FIG. 18 is a little simpler than the flow of the Push method defined in FIG. 19.

As can be seen from the foregoing description about the caching system, multiple main cache devices and/or multiple border cache devices may exist in one system. Then content caching of the system adaptively changes.

Generally, one SGi/Gi interface corresponds to one access point name (Access Point Name, APN). Therefore, a CPCF also corresponds to one APN. That is, one APN corresponds to one CPCF. In an actual deployment process, multiple APNs may use a same CPCP physical entity, but logically, one APN still corresponds to one CPCF logical entity.

For example, in both the flows shown in FIG. 16 and FIG. 17, one APN corresponds to one main cache. However, in the actual deployment process, multiple main cache devices may exist due to a capacity requirement or load sharing. Then in the flows shown in FIG 16 and FIG 17, the CPCF may, in a serial, parallel, or combined manner, notify these main caches to execute caching of content of the PDN. That is, the steps 203 to 206 in FIG 16 are executed in a serial, parallel, or combined manner. It should be noted that the step 206a needs to be executed only once but not multiple times. As shown in FIG. 20, steps 601 and 602 are consistent with the steps 201 and 202 in FIG. 16, and the CPCF executes the steps 203 to 206 in a serial, parallel, or combined manner according to the steps 203 to 206 defined in FIG 16.

606a. After any one of multiple main cache function entities sends a message to the CPCF, where the message indicates that the content indicated by the URN/URL has been successfully cached, the CPCF sends a message to the PDN of the third party, where the message indicates that the content corresponding to the URN/URL has been successfully cached.

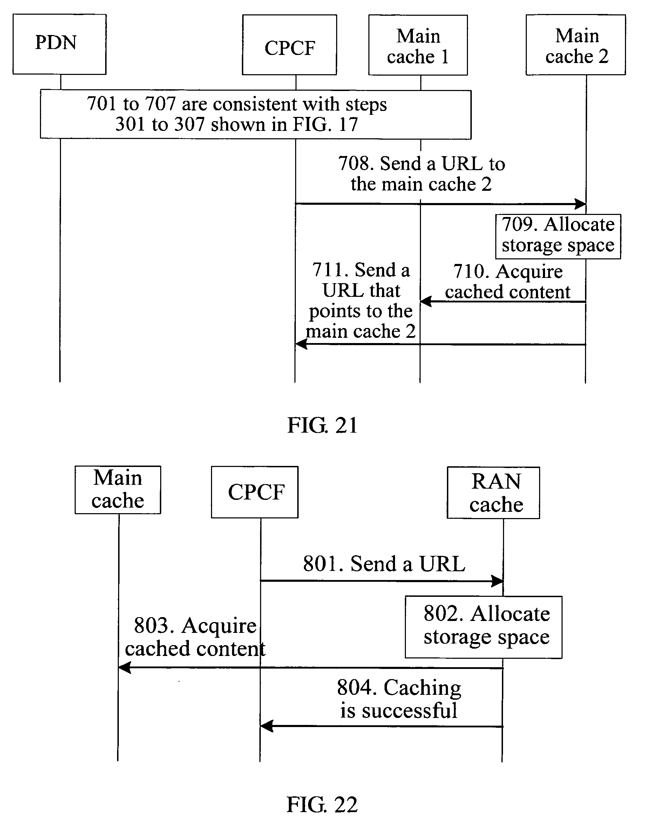

Corresponding to the flow in FIG. 17, in an embodiment shown in FIG. 21, its preceding steps are consistent with the steps 301 to 307 in FIG. 17. After these steps are executed, a main cache function entity 1 (main cache 1) successfully acquires the data of the content that corresponds to the URN/URL, generates a URL that points to the main cache function entity 1, and sends the URL that points to the main cache 1 to the CPCF.
708. The CPCF sends the URL that points to the main cache 1, the original URN/URL, and the metadata of the corresponding content to a main cache function entity 2 (main cache 2), where the URL that points to the main cache 1 is obtained in the foregoing step. The CPCF may obtain an IP address of the main cache function entity 2 through a DNS or in a manner of static configuration.
709. The main cache function entity 2 obtains the size of the content according to the metadata, and allocates corresponding storage space. (Note: Because the main cache function entity 2 further needs to store the URN/URL that corresponds to the content, the metadata, and other possible control information, a size of allocated cache is greater than the actual size of the content.)
710. After successfully allocating the storage space, the main cache function entity 2 acquires corresponding content data from the main cache 1 through the URL that points to the main cache 1, for example, through an HTTP GET command or in FTP mode.
711. After successfully acquiring the content data, the main cache function entity 2 generates a URL that stores a location of the content and points to the main cache 2, and sends a message to the CPCF, where the message indicates that the content has been successfully cached, and includes the URL that points to the main cache function entity 2.

In the URL that points to the main cache function entity 2, a host portion (Host) is an IP address of the main cache function entity 2 or a domain name of the main cache function entity 2.

When there are more main cache function entities such as a main cache function entity 3 and a main cache function entity 4, the CPCF may, by executing the method of the steps 708 to 711, replicate content that is stored in the main cache 1 to the other main cache function entities (and this is equivalent to point-to-multipoint replication); or may replicate a URL that is generated in a previous replication process, such as content in the main cache function entity 2, to the main cache function entity 3, and then replicate content in the main cache function entity 3 to the main cache function entity 4, and so on and so forth, which is equivalent to a kind of linear sequential serial replication. It is rather obvious that the point-to-multipoint replication method and the linear sequential serial replication method can be combined for use, and no further details are provided herein.

Similarly, for a case in which multiple RAN caches exist, the main cache function entity may adopt one of the manners shown in FIG. 18 and FIG. 19:
serially execute content caching of the RAN caches, that is, execute content caching of a next RAN cache after notifying one RAN cache function entity to finish executing content caching, and repeat the process till all the RAN caches finish executing content caching, where an advantage of this manner is that congestion will not occur in the main cache due to occurrence of content caching of a large number of RAN caches, but a disadvantage is that a content caching speed is relatively low; or
execute content caching of the RAN caches in parallel, that is, the main cache simultaneously notifies all the RAN cache function entities to simultaneously and concurrently execute content caching, where an advantage of this manner is that a content caching speed is high, but a disadvantage is that congestion may occur in the main cache due to occurrence of content caching of a large number of RAN caches; or
execute content caching of the RAN caches in a combined manner, that is, execute content caching of a next part of RAN caches after notifying a part of RAN cache function entities (such as N RAN cache function entities) to finish executing content caching, and repeat the process multiple times till all the RAN caches finish executing content caching, where an advantage of this manner is that an adequate caching speed can be maintained and at the same time congestion does not occur, and the number N is calculated according to an actual test and a transmission bandwidth of a C-S interface.

Certainly, FIG. 18 and FIG. 19 depict cases in which a main cache function entity controls an RAN cache. With reference to the preceding FIG. 9, the RAN cache may also be controlled by a CPCF.

When the architecture shown in FIG. 9 is used, the interface added between the RAN cache and the CPCF does not have any influence on interaction flows between the main cache and the CPCF or the external PDN, except that interaction with the RAN cache changes to the one shown in FIG 22.

When the steps defined in FIG 16, FIG. 17, FIG 20, or FIG 21 are executed, the main cache successfully acquires the data of the content that corresponds to the URN/URL and is pushed by the external PDN, generates a URL that stores a location of the content and points to the main cache, and sends the URL that points to the main cache to the CPCF. Then, as shown in FIG. 22, the following steps are included:
801. The CPCF sends the URL that points to the main cache, the original URN/URL, and the metadata of the corresponding content to the RAN cache function entity, where the URL that points to the main cache is obtained in the preceding step. The CPCF may obtain an IP address of the RAN cache function entity through a DNS or in a manner of static configuration.
802. The RAN cache obtains a size of the content according to the metadata, and allocates corresponding storage space.
   (Note: Because the RAN cache further needs to store the URN/URL that corresponds to the content, the metadata, and other possible control information, a size of allocated cache is greater than the actual size of the content.)
803. After successfully allocating the storage space, the RAN cache acquires the corresponding content data from the main cache through the URL that points to the main cache, for example, through an HTTP GET command or in FTP mode.
804. After successfully acquiring the content data, the RAN cache sends a message to the CPCF, where the message indicates that the content has been successfully cached.

Likewise, if multiple RAN caches exist in the system, the CPCF entity may execute the preceding steps 801 to 803:
serially execute content caching of the RAN caches, that is, execute content caching of a next RAN cache after notifying one RAN cache function entity to finish executing content caching, and repeat the process till all the RAN caches finish executing content caching; or
execute content caching of the RAN caches in parallel, that is, the main cache simultaneously notifies all the RAN cache function entities to simultaneously and concurrently execute content caching; or
execute content caching of the RAN caches in a combined manner, that is, execute content caching of a next part of RAN caches after notifying a part of RAN cache function entities (such as N RAN cache function entities) to finish executing content caching, and repeat the process multiple times till all the RAN caches finish executing content caching.

In the caching system according to the embodiments of the present invention, a caching policy control device is disposed, and it controls a caching process of a main cache device according to a request of an external PDN, so that the external PDN actively triggers the caching process, thereby improving flexibility and controllability of caching.

In addition, when the manner of actively caching content is used, the caching policy control device can precisely control cached content or the like according to a predetermined policy. In this way, differentiated control of content provided by the external PDN can be effectively implemented to help enhance competitiveness of an operator who provides the caching service.

In some specific embodiments, the caching system can be implemented by merely upgrading an existing network node, which protects existing investment and achieves high cost performance. The embodiments of the present invention can be applied to 2G, 3G, 4G, and non-3GPP access technologies, and provide very good forward and backward compatibility.

A person of ordinary skill in the art may understand that all or a part of the processes of the methods in the foregoing embodiments may be implemented by a computer program notifying relevant hardware. The program may be stored in a computer readable storage medium. When the program runs, the processes of the methods in the embodiments are performed. The storage medium may be a magnetic disk, an optical disk, a read-only memory (Read-Only Memory, ROM), a random access memory (Random Access Memory, RAM), or the like.

The foregoing descriptions are merely exemplary embodiments of the present invention, but are not intended to limit the protection scope of the present invention. Therefore, any equivalent variation made according to the claims of the present invention shall fall within the protection scope of the present invention.
Item 1. A caching system applied to a network, comprising a caching policy control device and at least one main cache device, wherein:
   the caching policy control device is configured to receive a content caching request sent by an external packet data network PDN, and control, according to the content caching request, the at least one main cache device to cache external content, wherein the external content is content sent by the external PDN; and
   the at least one main cache device is connected to the caching policy control device, located on a data channel between an anchor gateway of the network and the external PDN, and configured to cache the external content according to the control of the caching policy control device.
Item 2. The system according to item 1, wherein the caching policy control device comprises:
   a request acquiring module, configured to receive the content caching request sent by the external PDN;
   a permission determining module, configured to determine, according to the content caching request and a predetermined caching policy, whether to allow the at least one main cache device to cache the external content; and
   a caching control module, configured to, when a determination result of the permission determining module is that caching is allowed, send a main-cache command to the at least one main cache device, to control the at least one main cache device to cache the external content.
Item 3. The system according to item 2, wherein the at least one main cache device comprises:
   a main-cache starting module, configured to receive the main-cache command sent by the caching policy control device, and allocate local storage space according to the main-cache command; and
   a main-cache content acquiring module, configured to, after the local storage space is successfully allocated, acquire, according to the main-cache command, the external content sent by the external PDN.
Item 4. The system according to item 2, wherein the at least one main cache device comprises:
   a main-cache starting module, configured to receive the main-cache command sent by the caching policy control device, and allocate local storage space according to the main-cache command;
   a main-cache notification sending module, configured to notify the caching policy control device after the local storage space is successfully allocated, so that the caching policy control device notifies the external PDN to send the external content to the main cache device; and
   an external-content receiving module, configured to receive the external content sent by the PDN.
Item 5. The system according to item 3 or 4, wherein the at least one main cache device further comprises:
   a main address generating unit, configured to, after the external content is acquired, generate a network acquisition address for acquiring the external content from the main cache device.
Item 6. The system according to any one of items 1 to 5, wherein when the system comprises multiple main cache devices, the caching policy control device controls, in a serial manner, a parallel manner, or a serial and parallel manner, the multiple main cache devices to cache the external content.
Item 7. The system according to any one of items 1 to 6, further comprising:
   at least one border cache device, located on a user-plane data channel of the network, and configured to cache, according to control of the caching policy control device or the main cache device, the external content sent by the main cache device.
Item 8. The system according to item 7, wherein the at least one border cache device comprises:
   a border-cache starting module, configured to receive a border-cache command sent by the caching policy control device or the main cache device, and allocate local storage space according to the border-cache command; and
   a border-cache content acquiring module, configured to, after the local storage space is successfully allocated, acquire, according to the border-cache command, the external content sent by the main cache device.
Item 9. The system according to item 7, wherein the at least one border cache device comprises:
   a border-cache starting module, configured to receive a border-cache command sent by the caching policy control device or the main cache device, and allocate local storage space according to the border-cache command;
   a border-cache notification sending module, configured to notify the caching policy control device or the main cache device after the local storage space is successfully allocated, so that the caching policy control device notifies the main cache device to send the external content to the border cache device, or the main cache device sends the external content to the border cache device according to the notification; and
   an external-content receiving module, configured to receive the external content sent by the main cache device.
Item 10. The system according to item 8 or 9, wherein the at least one border cache device further comprises:
   a user address generating unit, configured to, after the external content is acquired, generate a network acquisition address for acquiring the external content from the border cache device.
Item 11. The system according to any one of items 7 to 10, wherein when the system comprises multiple border cache devices, the caching policy control device or the main cache device controls, in a serial manner, a parallel manner, or a serial and parallel manner, the multiple border cache devices to cache the external content.
Item 12. The system according to any one of items 1 to 11, wherein the caching policy control device is an independently disposed network device, or is disposed in a policy and charging rules function (PCRF).
Item 13. The system according to any one of items 1 to 12, wherein the main cache device is an independently disposed network device, or is disposed in an anchor gateway.
Item 14. The system according to any one of items 1 to 11, wherein the main cache device and the caching policy control device are disposed in a same device or disposed on a same logical function entity.
Item 15. A caching method applied to a network, wherein the network comprises a caching policy control device and at least one main cache device, and the method comprises:
   receiving, by the caching policy control device, a content caching request sent by an external PDN, and controlling, according to the content caching request, the at least one main cache device to cache external content, wherein the external content is content provided by the external PDN; and
   caching, by the at least one main cache device, the external content according to the control of the caching policy control device, wherein the at least one main cache device is connected to the caching policy control device, and is located on a data channel between an anchor gateway of the network and the external PDN.
Item 16. The method according to item 15, wherein the controlling, according to the content caching request, the at least one main cache device to cache external content comprises:
   determining, according to the content caching request and a predetermined caching policy, whether to allow the at least one main cache device to cache the external content; and
   when a determination result is that caching is allowed, sending a main-cache command to the at least one main cache device, to control the at least one main cache device to cache the external content.
Item 17. The method according to item 16, wherein the caching the external content according to the control of the caching policy control device comprises:
   receiving the main-cache command sent by the caching policy control device, and allocating local storage space according to the main-cache command; and
   after the local storage space is successfully allocated, acquiring, according to the main-cache command, the external content sent by the external PDN.
Item 18. The method according to item 16, wherein the caching the external content according to the control of the caching policy control device comprises:
   receiving the main-cache command sent by the caching policy control device, and allocating local storage space according to the main-cache command;
   notifying the caching policy control device after the local storage space is successfully allocated, so that the caching policy control device notifies the external PDN to send the external content to the main cache device; and
   receiving the external content sent by the PDN.
Item 19. The method according to any one of items 15 to 18, further comprising:
   caching, by at least one border cache device, according to control of the caching policy control device or the main cache device, the content sent by the main cache device, wherein the at least one border cache device is located on a user-plain data channel of the network.
Item 20. The method according to item 19, wherein the caching, according to control of the caching policy control device or the main cache device, the content sent by the main cache device comprises:
   receiving a border-cache command sent by the caching policy control device or the main cache device, and allocating local storage space according to the border-cache command; and
   after the local storage space is successfully allocated, acquiring, according to the border-cache command, the external content sent by the main cache device.
Item 21. The method according to item 19, wherein the caching, according to control of the caching policy control device or the main cache device, the content sent by the main cache device comprises:
   receiving a border-cache command sent by the caching policy control device or the main cache device, and allocating local storage space according to the border-cache command;
   notifying the caching policy control device or the main cache device after the local storage space is successfully allocated, so that the caching policy control device notifies the main cache device to send the external content to the border cache device, or the main cache device sends the external content to the border cache device according to the notification; and
   receiving the external content sent by the main cache device.
Item 22. A caching policy control device, wherein the caching policy control device is connected to at least one main cache device on a network; and
   the caching policy control device is configured to receive a content caching request sent by an external PDN, and control, according to the content caching request, the at least one main cache device to cache external content, wherein the external content is content sent by the external PDN.
Item 23. The caching policy control device according to item 22, comprising:
   a request acquiring module, configured to receive the content caching request sent by the external PDN;
   a permission determining module, configured to determine, according to the content caching request and a predetermined caching policy, whether to allow the at least one main cache device to cache the external content; and
   a caching control module, configured to, when a determination result of the permission determining module is that caching is allowed, send a main-cache command to the at least one main cache device, to control the at least one main cache device to cache the external content.
Item 24. The caching policy control device according to item 22 or 23, wherein when the network further comprises at least one border cache device, the caching policy control device is further configured to control the at least one border cache device to cache the external content sent by the main cache device.
Item 25. The caching policy control device according to any one of items 22 to 24, wherein the caching policy control device is an independently disposed network device, or is disposed in a policy and charging rules function PCRF.
Item 26. The caching policy control device according to any one of items 22 to 24, wherein the main cache device and the caching policy control device are disposed in a same device or disposed on a same logical function entity.
Item 27. A caching control method, wherein the method is applied to a network that comprises a caching policy control device, and the method comprises:
   receiving a content caching request sent by an external PDN; and
   controlling, according to the content caching request, at least one main cache device on the network to cache external content, wherein the external content is content sent by the external PDN.
Item 28. The caching control method according to item 27, wherein the controlling, according to the content caching request, at least one main cache device on the network to cache external content comprises:
   determining, according to the content caching request and a predetermined caching policy, whether to allow the at least one main cache device to cache the external content; and
   when a determination result of the permission determining module is that caching is allowed, sending a main-cache command to the at least one main cache device, to control the at least one main cache device to cache the external content.
Item 29. The caching control method according to item 27 or 28, further comprising: controlling at least one border cache device on the network to cache the external content sent by the main cache device.

## Claims

1. A caching system applied to a network, comprising a caching policy control device (20) and at least one main cache device (10), **characterized in that**:
the caching policy control device (20) is configured to receive a content caching request sent by an external packet data network, PDN, and control, according to the content caching request, the at least one main cache device (10) to cache external content, wherein the external content is content sent by the external PDN; and
the at least one main cache device (10) is connected to the caching policy control device (20), and is located on a data channel between an anchor gateway of the network and the external PDN, and configured to cache the external content according to the control of the caching policy control device (20);
wherein the caching policy control device (20) comprises:
a request acquiring module (200), configured to receive the content caching request sent by the external PDN;
a permission determining module (202), configured to determine, according to the content caching request and a predetermined caching policy, whether to allow the at least one main cache device (10) to cache the external content; and
a caching control module (204), configured to, when a determination result of the permission determining module (202) is that caching is allowed, send a main-cache command to the at least one main cache device (10), to control the at least one main cache device (10) to cache the external content;
wherein the at least one main cache device (10) comprises:
a main-cache starting module (100), configured to receive the main-cache command sent by the caching policy control device (20), and allocate local storage space according to the main-cache command;
a main-cache notification sending module (104), configured to notify the caching policy control device (20) after the local storage space is successfully allocated, so that the caching policy control device (20) notifies the external PDN to send the external content to the main cache device (10); and
an external-content receiving module (106), configured to receive the external content sent by the PDN.

2. The system according to claim 1, wherein the at least one main cache device (10) further comprises:
a main address generating unit, configured to, after the external content is acquired, generate a network acquisition address for acquiring the external content from the main cache device.

3. The system according to any one of claims 1 to 2, further comprising:
at least one border cache device (30), located non a user-plane data channel of the network, and configured to cache, according to control of the caching policy control device (20) or the main cache device (10), the external content sent by the main cache device (10).

4. The system according to claim 3, wherein the at least one border cache device (30) comprises:
a border-cache starting module, configured to receive a border-cache command sent by the caching policy control device (20) or the main cache device (10), and allocate local storage space according to the border-cache command; and
a border-cache content acquiring module, configured to, after the local storage space is successfully allocated, acquire, according to the border-cache command, the external content sent by the main cache device (10).

5. A caching method applied to a network, wherein the network comprises a caching policy control device (20) and at least one main cache device (10), and the method **characterized by**:
receiving, by the caching policy control device (20), a content caching request sent by an external packet data network, PDN, and controlling, according to the content caching request, the at least one main cache device (10) to cache external content, wherein the external content is content provided by the external packet data network, PDN; and
caching, by the at least one main cache device (10), the external content according to the control of the caching policy control device (20), wherein the at least one main cache device (10) is connected to the caching policy control device (20), and is located on a data channel between an anchor gateway of the network and the external PDN;
wherein the controlling, according to the content caching request, the at least one main cache device (10) to cache external content comprises:
determining, according to the content caching request and a predetermined caching policy, whether to allow the at least one main cache device (10) to cache the external content; and
when a determination result is that caching is allowed, sending a main-cache command to the at least one main cache device (10), to control the at least one main cache device (10) to cache the external content;
wherein the caching, by the at least one main cache device (10), the external content according to the control of the caching policy control device (20) comprises:
receiving the main-cache command sent by the caching policy control device (20), and allocating local storage space according to the main-cache command;
notifying the caching policy control device (20) after the local storage space is successfully allocated, so that the caching policy control device (20) notifies the external PDN to send the external content to the main cache device (10); and
receiving the external content sent by the PDN.

6. The method according to claim 5, further comprising:
caching, by at least one border cache device (30), according to control of the caching policy control device (20) or the main cache device (10), the content sent by the main cache device (10), wherein the at least one border cache device (30) is located on a user-plain data channel of the network.

7. The method according to claim 6, wherein the caching, according to control of the caching policy control device (20) or the main cache device (10), the content sent by the main cache device (10) comprises:
receiving a border-cache command sent by the caching policy control device (20) or the main cache device (10), and allocating local storage space according to the border-cache command; and
after the local storage space is successfully allocated, acquiring, according to the border-cache command, the external content sent by the main cache device (10).

8. A caching policy control device (20), wherein the caching policy control device is connected to at least one main cache device (10) on a network and to an external packet data network, PDN; **characterized in that**
the caching policy control device (20) is configured to receive a content caching request sent by the external packet data network, PDN, and control, according to the content caching request, the at least one main cache device (10) to cache external content, wherein the external content is content sent by the external PDN;
wherein the caching policy control device (20) comprises:
a request acquiring module (200), configured to receive the content caching request sent by the external PDN;
a permission determining module (202), configured to determine, according to the content caching request and a predetermined caching policy, whether to allow the at least one main cache device (10) to cache the external content; and
a caching control module (204), configured to, when a determination result of the permission determining module (202) is that caching is allowed, send a main-cache command to the at least one main cache device (10), to control the at least one main cache device (10) to cache the external content
wherein the caching policy control device (20) is configured to, after receiving a notification from the at least one main cache device (10) that local storage space at the at least one main cache device (10) for storing the external content is successfully allocated, to notify the external PDN to send the external content to the main cache device (10).

9. The caching policy control device (20) according to claim 8, wherein when the network further comprises at least one border cache device, the caching policy control device (20) is further configured to control the at least one border cache device to cache the external content sent by the main cache device.

## Patentansprüche

1. Zwischenspeicherungssystem, das auf ein Netz angewandt ist, das eine Zwischenspeicherungsstrategiesteuervorrichtung (20) und wenigstens eine Haupt-Zwischenspeichervorrichtung (10) umfasst, **dadurch gekennzeichnet, dass**:
die Zwischenspeicherungsstrategiesteuervorrichtung (20) konfiguriert ist, eine Inhaltszwischenspeicherungsanforderung zu empfangen, die durch ein externes Paketdatennetz, PDN, gesendet wird, und gemäß der Inhaltszwischenspeicherungsanforderung die wenigstens eine Haupt-Zwischenspeichervorrichtung (10) zu steuern, externen Inhalt zwischenzuspeichern, wobei der externe Inhalt durch das externe PDN gesendet wird; und
die wenigstens eine Haupt-Zwischenspeichervorrichtung (10) mit der Zwischenspeicherungsstrategiesteuervorrichtung (20) verbunden ist und sich auf einem Datenkanal zwischen einem Anker-Gateway des Netzes und dem externen PDN befindet, und konfiguriert ist, den externen Inhalt gemäß der Steuerung der Zwischenspeicherungsstrategiesteuervorrichtung (20) zwischenzuspeichern;
wobei die Zwischenspeicherungsstrategiesteuervorrichtung (20) Folgendes umfasst:
ein Anforderungserfassungsmodul (200), das konfiguriert ist, die Inhaltszwischenspeicherungsanforderung, die durch das externe PDN gesendet wird, zu empfangen;
ein Erlaubnisbestimmungsmodul (202), das konfiguriert ist, gemäß der Inhaltszwischenspeicherungsanforderung und einer vorbestimmten Zwischenspeicherungsstrategie zu bestimmen, ob es erlaubt sein soll, dass die wenigstens eine Haupt-Zwischenspeichervorrichtung (10) den externen Inhalt zwischenspeichert; und
ein Zwischenspeicherungssteuermodul (204), das konfiguriert ist, wenn ein Bestimmungsergebnis des Erlaubnisbestimmungsmoduls (202) ist, dass Zwischenspeichern erlaubt ist, einen Haupt-Zwischenspeicherbefehl zu der wenigstens einen Haupt-Zwischenspeichervorrichtung (10) zu senden, um die wenigstens eine Haupt-Zwischenspeichervorrichtung (10) zu steuern, den externen Inhalt zwischenzuspeichern;
wobei die wenigstens eine Haupt-Zwischenspeichervorrichtung (10) Folgendes umfasst:
ein Haupt-Zwischenspeicherstartmodul (100), das konfiguriert ist, den Haupt-Zwischenspeicherbefehl, der durch die Zwischenspeicherungsstrategiesteuervorrichtung (20) gesendet wird, zu empfangen und lokalen Speicherplatz gemäß dem Haupt-Zwischenspeicherbefehl zuzuweisen;
ein Haupt-wischenspeicherbenachrichtigungssendemodul (104), das konfiguriert ist, die Zwischenspeicherungsstrategiesteuervorrichtung (20) zu benachrichtigen, nachdem der lokale Speicherplatz erfolgreich zugewiesen worden ist, so dass die Zwischenspeicherungsstrategiesteuervorrichtung (20) das externe PDN benachrichtigt, den externen Inhalt zu der Haupt-Zwischenspeichervorrichtung (10) zu senden; und
ein Empfangsmodul (106) für externen Inhalt, das konfiguriert ist, den durch das PDN gesendeten externen Inhalt zu empfangen.

2. System nach Anspruch 1, wobei die wenigstens eine Haupt-Zwischenspeichervorrichtung (10) ferner Folgendes umfasst:
eine Haupt-Adressenerzeugungseinheit, die konfiguriert ist, nachdem der externe Inhalt erfasst worden ist, eine Netzerfassungsadresse zum Erfassen des externen Inhalts aus der Haupt-Zwischenspeichervorrichtung zu erzeugen.

3. System nach einem der Ansprüche 1 bis 2, das ferner Folgendes umfasst:
wenigstens eine Grenz-Zwischenspeichervorrichtung (30), die auf einem Datenkanal der Anwenderebene des Netzes angeordnet ist und konfiguriert ist, gemäß der Steuerung der Zwischenspeicherungsstrategiesteuervorrichtung (20) oder der Haupt-Zwischenspeichervorrichtung (10) den externen Inhalt, der durch die Haupt-Zwischenspeichervorrichtung (10) gesendet wird, zwischenzuspeichern.

4. System nach Anspruch 3, wobei die wenigstens eine Grenz-Zwischenspeichervorrichtung (30) Folgendes umfasst:
ein Grenz-Zwischenspeicherstartmodul, das konfiguriert ist, einen Grenz-Zwischenspeicherbefehl zu empfangen, der durch die Zwischenspeicherungsstrategiesteuervorrichtung (20) oder die Haupt-Zwischenspeichervorrichtung (10) gesendet wird, und lokalen Speicherplatz gemäß dem Grenz-Zwischenspeicherbefehl zuzuweisen; und
ein Grenz-Zwischenspeicherinhaltserfassungsmodul, das konfiguriert ist, nachdem der lokale Speicherplatz erfolgreich zugewiesen worden ist, gemäß dem Grenz-Zwischenspeicherbefehl den externen Inhalt, der durch die Haupt-Zwischenspeichervorrichtung (10) gesendet wird, zu erfassen.

5. Zwischenspeicherungsverfahren, das auf ein Netz angewandt wird, wobei das Netz eine Zwischenspeicherungsstrategiesteuervorrichtung (20) und wenigstens eine Haupt-Zwischenspeichervorrichtung (10) umfasst, und wobei das Verfahren **gekennzeichnet ist durch**:
Empfangen **durch** die Zwischenspeicherungsstrategiesteuervorrichtung (20) einer Inhaltszwischenspeicherungsanforderung, die **durch** ein externes Paketdatennetz, PDN, gesendet wird, und Steuern gemäß der Inhaltszwischenspeicherungsanforderung der wenigstens einen Haupt-Zwischenspeichervorrichtung (10), externen Inhalt zwischenzuspeichern, wobei der externe Inhalt Inhalt ist, der **durch** das externe Paketdatennetz, PDN, bereitgestellt wird; und
Zwischenspeichern **durch** die wenigstens eine Haupt-Zwischenspeichervorrichtung (10) des externen Inhalts gemäß der Steuerung der Zwischenspeicherungsstrategiesteuervorrichtung (20), wobei die wenigstens eine Haupt-Zwischenspeichervorrichtung (10) mit der Zwischenspeicherungsstrategiesteuervorrichtung (20) verbunden ist und auf einem Datenkanal zwischen einem Anker-Gateway des Netzes und dem externen PDN angeordnet ist;
wobei das Steuern gemäß der Inhaltszwischenspeicherungsanforderung der wenigstens einen Haupt-Zwischenspeichervorrichtung (10), den externen Inhalt zwischenzuspeichern, Folgendes umfasst:
Bestimmen gemäß der Inhaltszwischenspeicherungsanforderung und einer vorbestimmten Zwischenspeicherungsstrategie, ob es erlaubt sein soll, dass die wenigstens eine Haupt-Zwischenspeichervorrichtung (10) den externen Inhalt zwischenspeichert; und
wenn ein Bestimmungsergebnis ist, dass Zwischenspeichern erlaubt ist, Senden eines Haupt-Zwischenspeicherbefehls zu der wenigstens einen Haupt-Zwischenspeichervorrichtung (10), um die wenigstens eine Haupt-Zwischenspeichervorrichtung (10) zu steuern, den externen Inhalt zwischenzuspeichern;
wobei das Zwischenspeichern **durch** die wenigstens eine Haupt-Zwischenspeichervorrichtung (10) des externen Inhalts gemäß der Steuerung der Zwischenspeicherungsstrategiesteuervorrichtung (20) Folgendes umfasst:
Empfangen des Haupt-Zwischenspeicherbefehls, der **durch** die Zwischenspeicherungsstrategiesteuervorrichtung (20) gesendet wird, und Zuweisen von lokalem Speicherplatz gemäß dem Haupt-Zwischenspeicherbefehl;
Benachrichtigen der Zwischenspeicherungsstrategiesteuervorrichtung (20), nachdem der lokale Speicherplatz erfolgreich zugewiesen worden ist, so dass die Zwischenspeicherungsstrategiesteuervorrichtung (20) das externe PDN benachrichtigt, den externen Inhalt zu der Haupt-Zwischenspeichervorrichtung (10) zu senden; und
Empfangen des externen Inhalts, der **durch** das PDN gesendet wird.

6. Verfahren nach Anspruch 5, das ferner Folgendes umfasst;
Zwischenspeichern durch wenigstens eine Grenz-Zwischenspeichervorrichtung (30) gemäß der Steuerung der Zwischenspeicherungsstrategiesteuervorrichtung (20) oder der Haupt-Zwischenspeichervorrichtung (10) des Inhalts, der durch die Haupt-Zwischenspeichervorrichtung (10) gesendet wird, wobei die wenigstens eine Grenz-Zwischenspeichervorrichtung (30) auf einem Datenkanal der Anwenderebene des Netzes angeordnet ist.

7. Verfahren nach Anspruch 6, wobei das Zwischenspeichern gemäß der Steuerung der Zwischenspeicherungsstrategiesteuervorrichtung (20) oder der Haupt-Zwischenspeichervorrichtung (10) des Inhalts, der durch die Haupt-Zwischenspeichervorrichtung (10) gesendet wird, Folgendes umfasst:
Empfangen eines Grenz-Zwischenspeicherbefehls, der durch die Zwischenspeicherungsstrategiesteuervorrichtung (20) oder die Haupt-Zwischenspeichervorrichtung (10) gesendet wird, und Zuweisen von lokalem Speicherplatz gemäß dem Grenz-Zwischenspeicherbefehl; und
nachdem der lokale Speicherplatz erfolgreich zugewiesen worden ist, Erfassen gemäß dem Grenz-Zwischenspeicherbefehl des externen Inhalts, der durch die Haupt-Zwischenspeichervorrichtung (10) gesendet wird.

8. Zwischenspeicherungsstrategiesteuervorrichtung (20), wobei die Zwischenspeicherungsstrategiesteuervorrichtung mit wenigstens einer Haupt-Zwischenspeichervorrichtung (10) auf einem Netz und mit einem externen Paketdatennetz, PDN, verbunden ist; **dadurch gekennzeichnet, dass**
die Zwischenspeicherungsstrategiesteuervorrichtung (20) konfiguriert ist, eine Inhaltszwischenspeicherungsanforderung zu empfangen, die durch das externe Paketdatennetz, PDN, gesendet wird, und gemäß der Inhaltszwischenspeicherungsanforderung die wenigstens eine Haupt-Zwischenspeichervorrichtung (10) zu steuern, externen Inhalt zwischenzuspeichern, wobei der externe Inhalt Inhalt ist, der durch das externe PDN gesendet wird; wobei die Zwischenspeicherungsstrategiesteuervorrichtung (20) Folgendes umfasst:
ein Anforderungserfassungsmodul (200), das konfiguriert ist, die Inhaltszwischenspeicherungsanforderung, die durch das externe PDN gesendet wird, zu empfangen;
ein Erlaubnisbestimmungsmodul (202), das konfiguriert ist, gemäß der Inhaltszwischenspeicherungsanforderung und einer vorbestimmten Zwischenspeicherungsstrategie zu bestimmen, ob es erlaubt sein soll, dass die wenigstens eine Haupt-Zwischenspeichervorrichtung (10) den externen Inhalt zwischenspeichert; und
ein Zwischenspeicherungssteuermodul (204), das konfiguriert ist, wenn ein Bestimmungsergebnis des Erlaubnisbestimmungsmoduls (202) ist, dass Zwischenspeichern erlaubt ist, einen Haupt-Zwischenspeicherbefehl zu der wenigstens einen Haupt-Zwischenspeichervorrichtung (10) zu senden, um die wenigstens eine Haupt-Zwischenspeichervorrichtung (10) zu steuern, den externen Inhalt zwischenzuspeichern,
wobei die Zwischenspeicherungsstrategiesteuervorrichtung (20) konfiguriert ist, nach dem Empfangen einer Benachrichtigung von der wenigstens einen Haupt-Zwischenspeichervorrichtung (10), dass lokaler Speicherplatz in der wenigstens einen Haupt-Zwischenspeichervorrichtung (10) zum Speichern des externen Inhalts erfolgreich zugewiesen worden ist, das externe PDN zu benachrichtigen, den externen Inhalt zu der Haupt-Zwischenspeichervorrichtung (10) zu senden.

9. Zwischenspeicherungsstrategiesteuervorrichtung (20) nach Anspruch 8, wobei, wenn das Netz ferner wenigstens eine Grenz-Zwischenspeichervorrichtung umfasst, die Zwischenspeicherungsstrategiesteuervorrichtung (20) ferner konfiguriert ist, die wenigstens eine Grenz-Zwischenspeichervorrichtung zu steuern, den externen Inhalt, der durch die Haupt-Zwischenspeichervorrichtung gesendet wird, zwischenzuspeichern.

## Revendications

1. Système de mise en cache appliqué à un réseau, comprenant un dispositif de commande de stratégie de mise en cache (20) et au moins un dispositif de cache principal (10), **caractérisé en ce que** :
le dispositif de commande de stratégie de mise en cache (20) est configuré pour recevoir une requête de mise en cache de contenu envoyée par un réseau de données par paquets, PDN, externe, et commander, conformément à la requête de mise en cache de contenu, à l'au moins un dispositif de cache principal (10) de mettre en cache un contenu externe, dans lequel le contenu externe est un contenu envoyé par le réseau PDN externe ; et
l'au moins un dispositif de cache principal (10) est connecté au dispositif de commande de stratégie de mise en cache (20), et est situé sur un canal de données entre une passerelle d'ancrage du réseau et le réseau PDN externe, et configuré pour mettre en cache le contenu externe conformément à la commande du dispositif de commande stratégie de mise en cache (20) ;
dans lequel le dispositif de commande de stratégie de mise en cache (20) comprend
un module d'acquisition de (200), configuré pour recevoir la requête de mise en cache de contenu envoyée par le réseau PDN externe;
un module de détermination d'autorisation (202), configuré pour déterminer, conformément à la requête de mise en cache de contenu et à stratégie de mise en cache prédéterminée, qu'il convient ou non d'autoriser l'au moins un dispositif de cache principal (10) à mettre en cache le externe ; et
un module de commande de mise en cache (204), configuré pour, quand un résultat de détermination du module de détermination d'autorisation (202) est que la mise en cache est autorisée, envoyer une commande de cache principal à l'au moins un dispositif de cache principal (10), pour commander à l'au moins un dispositif de cache principal (10) de mettre en cache le contenu externe ;
dans lequel l'au moins un dispositif de cache principal (10) comprend :
un module de lancement de cache principal (100), configuré pour recevoir la commande de cache principal envoyée par le dispositif de commande de stratégie de mise en cache (20), et allouer un espace de mémorisation local conformément à la commande de cache principal ;
un module d'envoi de notification de cache principal (104), configuré pour notifier le dispositif de commande de stratégie de mise en cache (20) après une allocation réussie de l'espace de mémorisation local, de telle sorte que le dispositif de commande de stratégie de mise en cache (20) notifie le réseau PDN externe d'envoyer le contenu externe au dispositif de cache principal (10) ; et
un module de réception de contenu externe (106), configuré pour recevoir le contenu externe envoyé par le réseau PDN.

2. Système selon la revendication 1, dans lequel l'au moins un dispositif de cache principal (10) comprend en outre :
une unité de génération d'adresse principale, configuré pour, après l'acquisition du contenu externe, générer une adresse d'acquisition de réseau pour acquérir le contenu externe à partir du dispositif de cache principal.

3. Système selon l'une quelconque des revendications 1 à 2, comprenant en outre :
au moins un dispositif de cache limitrophe (30), situé sur un canal de données de plan utilisateur du réseau, et configuré pour mettre en cache, conformément à une commande du dispositif de commande de stratégie de mise en cache (20) ou du dispositif de cache principal (10), le contenu externe envoyé par le dispositif de cache principal (10).

4. Système selon la revendication 3, dans lequel l'au moins un dispositif de cache limitrophe (30) comprend :
un module de lancement de cache limitrophe, configuré pour recevoir une commande de cache limitrophe envoyée par le dispositif de commande de stratégie de mise en cache (20) ou le dispositif de cache principal (10), et allouer un espace de mémorisation local conformément à la commande de cache limitrophe ; et
un module d'acquisition de contenu de cache limitrophe, configuré pour, après l'allocation réussie de l'espace de mémorisation local, acquérir, en fonction de la commande de cache limitrophe, le contenu externe envoyé par le dispositif de cache principal (10).

5. Procédé de mise en cache appliqué à un réseau, dans lequel le réseau comprend un dispositif de commande de stratégie de mise en cache (20) et au moins un dispositif de cache principal (10), et le procédé étant **caractérisé par** :
la réception, par le dispositif de commande de stratégie de mise en cache (20), d'une requête de mise en cache de contenu envoyée par un réseau de données par paquets, PDN, externe, et la commande, en fonction de la requête de mise en cache de contenu, à l'au moins un dispositif de cache principal (10) de mettre en cache un contenu externe, dans lequel le contenu externe est un contenu envoyé par le réseau PDN externe ; et
la mise en cache, par l'au moins un dispositif de cache principal (10) du contenu externe conformément à la commande du dispositif de commande de stratégie de mise en cache (20), dans lequel l'au moins un dispositif de cache principal (10) est connecté au dispositif de commande de stratégie de mise en cache (20) et est situé sur un canal de données entre une passerelle d'ancrage du réseau et le réseau PDN externe ;
dans lequel la commande, conformément à la requête de mise en cache de contenu, à l'au moins un dispositif de cache principal (10) de mettre en cache le contenu externe comprend :
la détermination, conformément à la requête de mise en cache de contenu et à une stratégie de mise en cache prédéterminée, qu'il convient ou non d'autoriser l'au moins un dispositif de cache principal (10) à mettre en cache le contenu externe ; et
quand un résultat de détermination est que la mise en cache est autorisée, envoyer une commande de cache principal à l'au moins un dispositif de cache principal (10), pour commander à l'au moins un dispositif de cache principal (10) de mettre en cache le contenu externe ;
dans lequel la mise en cache, par l'au moins un dispositif de cache principal (10), du contenu externe conformément à la commande du dispositif de commande de stratégie de mise en cache (20) comprend :
la réception de la commande de cache principal envoyée par le dispositif de commande de stratégie de mise en cache (20), et l'allocation d'un espace de mémorisation local conformément à la commande de cache principal ;
la notification au dispositif de commande de stratégie de mise en cache (20) après l'allocation réussie de l'espace de mémorisation local, de telle sorte que le dispositif de commande de stratégie de mise en cache (20) notifie le réseau PDN externe d'envoyer le contenu externe au dispositif de cache principal (10) ; et
la réception du contenu externe envoyé par le réseau PDN.

6. Procédé selon la revendication 5, comprenant en outre :
la mise en cache, par au moins un dispositif de cache limitrophe (30), conformément à une commande du dispositif de commande de stratégie de mise en cache (20) ou du dispositif de cache principal (10), du contenu externe envoyé par le dispositif de cache principal (10), dans lequel l'au moins un dispositif de cache limitrophe (30) est situé sur un canal de données de plan utilisateur du réseau.

7. Procédé selon la revendication 6, dans lequel la mise en cache, conformément à la commande du dispositif de commande de stratégie de mise en cache (20) ou du dispositif de cache principal (10), du contenu envoyé par le dispositif de cache principal (10) comprend :
la réception d'une commande de cache limitrophe envoyée par le dispositif de commande de stratégie de mise en cache (20) ou le dispositif de cache principal (10), et l'allocation d'un espace de mémorisation local conformément à la commande de cache limitrophe ; et
après l'allocation réussie de l'espace de mémorisation local, l'acquisition, conformément à la commande de cache limitrophe, du contenu externe envoyé par le dispositif de cache principal (10).

8. Dispositif de commande de stratégie de mise en cache (20), le dispositif de commande de stratégie de mise en cache étant connecté à au moins un dispositif de cache principal (10) sur un réseau et à un réseau de données par paquets, PDN, externe ;
**caractérisé en ce que** :
le dispositif de commande de stratégie de mise en cache (20) est configuré pour recevoir une requête de mise en cache de contenu envoyée par un réseau de données par paquets, PDN, externe et commander, en fonction de la requête de mise en cache de contenu, à l'au moins un dispositif de cache principal (10) de mettre en cache un contenu externe, dans lequel le contenu externe est un contenu envoyé par le réseau PDN externe ; et
dans lequel le dispositif de commande de stratégie de mise en cache (20) comprend
un module d'acquisition de requête (200), configuré pour recevoir la requête de mise en cache de contenu envoyée par le réseau PDN externe ;
un module de détermination d'autorisation (202), configuré pour déterminer, conformément à la requête de mise en cache de contenu et à une stratégie de mise en cache prédéterminée, qu'il convient ou non d'autoriser l'au moins un dispositif de cache principal (10) à mettre en cache le contenu externe ; et
un module de commande de mise en cache (204), configuré pour, quand un résultat de détermination du module de détermination d'autorisation (202) est que la mise en cache est autorisée, envoyer une commande de cache principal à l'au moins un dispositif de cache principal (10), pour commander à l'au moins un dispositif de cache principal (10) de mettre en cache le contenu externe ;
le dispositif de commande de stratégie de mise en cache (20) étant configuré pour, après la réception d'une notification depuis l'au moins un dispositif de cache principal (10) qu'un espace de mémorisation local au niveau de l'au moins un dispositif de cache principal (10) pour mémoriser le contenu externe est correctement alloué, notifier au réseau PDN externe d'envoyer le contenu externe au dispositif de cache principal (10).

9. Dispositif de commande de stratégie de mise en cache (20) selon la revendication 8, dans lequel, quand le réseau comprend en outre au moins un dispositif de cache limitrophe, le dispositif de commande de stratégie de mise en cache (20) est configuré en outre pour commander à l'au moins un dispositif de cache limitrophe de mettre en cache le contenu externe envoyé par le dispositif de cache principal.
